# EUROPEAN PATENT APPLICATION

(11) **EP 4 834 104 A1**
(43) Date of publication of application: **04.11.2026**
(21) Application number: 24911869.6
(22) Date of filing: 07.09.2024
(51) Int. Cl.: A01K 63/04, C02F 1/461

(54) **ELECTROLYSIS DEVICE FOR AQUATIC ORGANISM FARMING, CIRCULATION TYPE WATER TREATMENT SYSTEM FOR AQUATIC ORGANISM FARMING, AND ELECTROLYSIS METHOD FOR AQUATIC ORGANISM FARMING**

(30) Priority: 28.12.2023 JP 2023223729; 19.02.2024 JP 2024022556; 02.05.2024 JP 2024074864
(71) Applicant: Verde Aqua Co., Ltd., Nagoya-shi, Aichi 460-0003 (JP)
(72) Inventor: TAMAI Kazusei, Nagoya-shi, Aichi 460-0003 (JP); TAKEHIRO Yoji, Nagoya-shi, Aichi 460-0003 (JP); FUJII Toshinori, Fukuyama-shi, Hiroshima 721-0971 (JP); KUMAI Kazuyoshi, Kyoto 613-0042 (JP)
(74) Representative: Ter Meer und Partner mbB
(86) International application number: PCT/JP2024/032128
(87) International publication number: WO 2025/141975

(57) **Abstract**

An electrolysis section (13) composing at least a part of an electrolysis apparatus performs electrolysis of rearing water in a region in which the rearing water is stored or flows, thereby generating a chloric acid compound and decomposing ammonia or ammonium ions in the rearing water. The electrolysis section (13) includes an electrode section (55) including a first electrode (55A) and a second electrode (55B) provided in the region, and a voltage application section (51) configured to apply voltage between the electrodes. The voltage application section (51) switches between a first state of performing electrolysis in the region by applying voltage with the first electrode (55A) as an anode and the second electrode (55B) as a cathode, and a second state of applying voltage with the second electrode (55B) as an anode and the first electrode (55A) as a cathode.

## Description

### FIELD OF THE INVENTION

The present disclosure relates to an electrolysis apparatus for aquatic organism aquaculture, a circulation-type water treatment system for aquatic organism aquaculture, and an electrolysis method for aquatic organism aquaculture.

### BACKGROUND OF THE INVENTION

As an example of a system for performing aquaculture of aquatic organisms, a closed recirculation aquaculture system is known. The closed recirculation aquaculture system is of a type in which residual feed and excreta excreted by organisms are decomposed and purified through a filtration tank and water is circulated. In a general closed recirculation aquaculture system, a method using microorganisms is prevalently used for decomposition and purification of nitrogen compounds in rearing water. As a technology of this type, the one described in Patent Document 1 has been proposed.

### CITATION LIST/ PATENT DOCUMENT

Patent Document 1: Japanese Patent No. 7345037

### SUMMARY OF INVENTION

### PROBLEMS TO BE SOLVED BY THE INVENTION

In an aquaculture management system disclosed in Patent Document 1, since ammonia is generated through metabolic activity of aquatic organisms and decomposition of organic substances such as residual feed in a water tank, rearing water is circulated to pass through a filtration tank to undergo biological filtration, whereby the ammonia is decomposed and changed to less toxic nitric acid. In the filtration tank, nitrifying bacteria (microorganisms) for oxidizing ammonia in water containing oxygen so as to be changed to nitrous acid and further nitric acid are stored.

However, when a purification method using microorganisms is adopted as in Patent Document 1, there is a problem that the purification capability depends on the microorganisms. In this regard, the inventors of the present application have assumed, as a method for decomposing ammonia contained in rearing water containing salt, a method in which sodium hypochlorite is generated through electrolysis of rearing water containing salt and the sodium hypochlorite is reacted with ammonia present in the rearing water, thus directly decomposing ammonia into nitrogen. Using this method makes it possible to decompose ammonia while reducing dependency on microorganisms, and assuredly prevents occurrence of nitrous acid, nitric acid, and the like in the decomposition process.

However, using the above method has a problem that, in electrolysis, deposits due to electrolysis are readily deposited on the surfaces of electrodes. When deposits are deposited on the surfaces of the electrodes, generation of sodium hypochlorite is inhibited, so that the decomposition rate of ammonia is likely to be reduced.

An object of the present disclosure is to provide a technology that makes it possible to, in performing aquaculture of aquatic organisms, decompose ammonia in water by a method using electrolysis and easily remove deposits deposited on the surfaces of electrodes.

### SOLUTION TO THE PROBLEMS

An electrolysis apparatus for aquatic organism aquaculture according to one aspect of the present disclosure is an electrolysis apparatus for aquatic organism aquaculture, used in a circulation-type water treatment system including a rearing tank which is a tank for performing aquaculture of aquatic organisms and in which rearing water containing salt is stored, the circulation-type water treatment system being configured to treat the rearing water while circulating the rearing water from the rearing tank, and return the treated rearing water to the rearing tank, the electrolysis apparatus including an electrolysis section configured to perform electrolysis of the rearing water in a region in which the rearing water is stored or flows, thereby generating a chloric acid compound, so that the generated chloric acid compound reacts with ammonia or ammonium ions in the rearing water, thereby decomposing ammonia or ammonium ions in the rearing water. The electrolysis section includes an electrode section including a first electrode and a second electrode located in the region, and a voltage application section configured to apply voltage between the first electrode and the second electrode. The voltage application section switches between a first state of performing the electrolysis in the region while applying voltage with the first electrode as an anode and the second electrode as a cathode, and a second state of applying voltage with the second electrode as an anode and the first electrode as a cathode.

A circulation-type water treatment system for aquatic organism aquaculture according to another aspect of the present disclosure is a circulation-type water treatment system for aquatic organism aquaculture, including: the above electrolysis apparatus for aquatic organism aquaculture; a removal section configured to remove at least solids in a first region in which the rearing water sent from the rearing tank is stored or flows; the electrolysis section configured to perform the electrolysis of the rearing water in a second region which is the region in which the rearing water having passed through the first region is stored or flows; and an activated carbon section configured to remove at least residual chlorine by activated carbon in a third region in which the rearing water having passed through the second region is stored or flows.

A circulation-type water treatment system for aquatic organism aquaculture according to another aspect of the present disclosure is a circulation-type water treatment system for aquatic organism aquaculture, including: the above electrolysis apparatus for aquatic organism aquaculture; an electrolysis tank configured such that the rearing water is stored or flows therein; and a reaction tank configured such that the rearing water discharged from the electrolysis tank is stored or flows in the reaction tank. Inside of the electrolysis tank is the region. The electrolysis tank includes a first guide path configured to guide water present at a higher position than a first height in the electrolysis tank to outside of the electrolysis tank without guiding water present at a lower position than the first height to outside of the electrolysis tank. The reaction tank includes a second guide path configured to guide water present at a higher position than a second height in the reaction tank to outside of the reaction tank without guiding water present at a lower position than the second height to outside of the reaction tank.

An electrolysis method for aquatic organism aquaculture according to one aspect of the present disclosure is an electrolysis method for aquatic organism aquaculture, used in a circulation-type water treatment system including a rearing tank which is a tank for performing aquaculture of aquatic organisms and in which rearing water containing salt is stored, the circulation-type water treatment system being configured to treat the rearing water while circulating the rearing water from the rearing tank, and return the treated rearing water to the rearing tank, the electrolysis method being performed using an electrolysis section including an electrode section including a first electrode and a second electrode, and a voltage application section configured to apply voltage between the first electrode and the second electrode, the electrolysis method comprising: applying voltage between the electrodes by the voltage application section in a state in which the first electrode and the second electrode are located in a region in which the rearing water is stored or flows, thereby performing electrolysis of the rearing water and generating a chloric acid compound, so that the generated chloric acid compound reacts with ammonia or ammonium ions in the rearing water, thereby decomposing ammonia or ammonium ions in the rearing water; and by the voltage application section, switching between a first state of performing the electrolysis in the region by applying voltage with the first electrode as an anode and the second electrode as a cathode, and a second state of applying voltage with the second electrode as an anode and the first electrode as a cathode.

### EFFECT OF THE INVENTION

The technology according to the present disclosure makes it possible to, in performing aquaculture of aquatic organisms, decompose ammonia or ammonium ions in water by a method using electrolysis and easily remove deposits deposited on the surfaces of electrodes.

### BRIEF DESCRIPTION OF THE DRAWINGS

FIG. 1 conceptually illustrates an example of a circulation-type water treatment system according to a first embodiment.
FIG. 2 is a block diagram schematically showing an example of an electrical configuration of the circulation-type water treatment system shown in FIG. 1.
FIG. 3 schematically illustrates an example of configurations of a removal section, an electrolysis tank, and the like of the circulation-type water treatment system shown in FIG. 1.
FIG. 4 illustrates a more specific example of the configurations shown in FIG. 3.
FIG. 5 schematically illustrates an example of configurations of the electrolysis tank, a reaction tank, and the like of the circulation-type water treatment system shown in FIG. 1.
FIG. 6 schematically illustrates an example of a configuration of the electrolysis tank of the circulation-type water treatment system shown in FIG. 1 as seen in a direction different from that in FIG. 5.
FIG. 7 illustrates a specific example of a residual chlorine removal tank, a standby tank, and the like of the circulation-type water treatment system shown in FIG. 1.
FIG. 8 illustrates an example of configurations of a removal section, an electrolysis tank, and the like of a circulation-type water treatment system of a second embodiment.
FIG. 9 schematically illustrates an example of configurations of an electrolysis tank, a reaction tank, and the like of a circulation-type water treatment system according to a third embodiment.
FIG. 10 illustrates a specific example of a residual chlorine removal tank, a switching section, a standby tank, and the like of a circulation-type water treatment system of a fourth embodiment.

### DESCRIPTION OF EMBODIMENTS

The following [1] to [13] are examples of characteristic technologies included in the present disclosure.
[1] An electrolysis apparatus for aquatic organism aquaculture, used in a circulation-type water treatment system including a rearing tank which is a tank for performing aquaculture of aquatic organisms and in which rearing water containing salt is stored, the circulation-type water treatment system being configured to treat the rearing water while circulating the rearing water from the rearing tank, and return the treated rearing water to the rearing tank,
   the electrolysis apparatus comprising an electrolysis section configured to perform electrolysis of the rearing water in a region in which the rearing water is stored or flows, thereby generating a chloric acid compound, so that the generated chloric acid compound reacts with ammonia or ammonium ions in the rearing water, thereby decomposing ammonia or ammonium ions in the rearing water, wherein
   the electrolysis section includes
      an electrode section including a first electrode and a second electrode located in the region, and
      a voltage application section configured to apply voltage between the first electrode and the second electrode, and
   the voltage application section switches between a first state of performing the electrolysis in the region while applying voltage with the first electrode as an anode and the second electrode as a cathode, and a second state of applying voltage with the second electrode as an anode and the first electrode as a cathode.

In the electrolysis apparatus of the above [1], by performing electrolysis of rearing water containing salt, a chloric acid compound (e.g., sodium hypochlorite) is generated, so that the chloric acid compound reacts with ammonia or ammonium ions present in the rearing water, whereby ammonia or ammonium ions can be directly decomposed to nitrogen, and in the decomposition process, generation of nitrous acid, nitric acid, and the like can be assuredly prevented. However, in a case of adopting the above method, without taking any measure, there is a concern that deposits are deposited on the surfaces of the electrodes and thus hampers electrolysis. In the above electrolysis apparatus, it is possible to switch between a first state of performing electrolysis by applying voltage with the first electrode as an anode and the second electrode as a cathode, and a second state of applying voltage with the second electrode as an anode and the first electrode as a cathode. Therefore, the deposits deposited on the surfaces of the electrodes through continuous electrolysis can be easily separated from the electrodes by switching. Thus, the electrolysis apparatus can easily remove deposits deposited on the surfaces of the electrodes.

[2] The electrolysis apparatus for aquatic organism aquaculture described in [1], wherein
the electrode section includes an electrode holding portion holding the first electrode and the second electrode, and the first electrode, the second electrode, and the electrode holding portion are integrally formed,
the circulation-type water treatment system is provided with an electrolysis tank configured such that the rearing water is stored or flows therein, and inside of the electrolysis tank is the region, and
the integrally formed electrode section is attachable and detachable to and from the electrolysis tank.

In the electrolysis apparatus of the above [2], the electrode section in which the first electrode, the second electrode, and the electrode holding portion are integrally formed is configured to be attachable and detachable to and from the electrolysis tank. Therefore, work for detaching the electrode section in order to perform cleaning can be easily performed. In particular, promotion of separation of deposits by switching and ease of work for attaching/detaching the electrode section exhibit a synergistic effect, thus further facilitating cleaning.

[3] The electrolysis apparatus for aquatic organism aquaculture described in [1] or [2], further comprising an electrolysis tank configured such that the rearing water is stored or flows therein, wherein
inside of the electrolysis tank is the region, and
the electrolysis apparatus further comprises a guide section configured to guide and collect deposits falling from the electrode section in the electrolysis tank, toward a predetermined position in the electrolysis tank.

In the electrolysis apparatus of the above [3], deposits falling from the electrode section can be automatically collected toward a predetermined position by the guide section. Thus, it is possible to easily perform not only separation of deposits from the electrode section but also collection of the separated deposits.

[4] The electrolysis apparatus for aquatic organism aquaculture described in any one of [1] to [3], further comprising an electrolysis tank configured such that the rearing water is stored or flows therein, wherein
inside of the electrolysis tank is the region,
the electrolysis apparatus further comprises a discharge section including a pipe through which deposits having fallen from the electrode section in the electrolysis tank are discharged, and
the discharge section is configured to take the deposits into the pipe at a lower position than the electrode section and discharge the deposits from the electrolysis tank through the pipe.

In the electrolysis apparatus of the above [4], deposits having fallen from the electrode section can be taken into the pipe at a lower position than the electrode section and can be discharged therethrough. Therefore, it is possible to prevent such a phenomenon that in a deposit discharge process, deposits are dispersed and thus readily flow to the subsequent process.

[5] The electrolysis apparatus for aquatic organism aquaculture described in any one of [1] to [4], further comprising an electrolysis tank configured such that the rearing water is stored or flows therein, wherein
inside of the electrolysis tank is the region, and
the electrolysis tank includes a guide path configured to guide water present at a higher position than a predetermined height in the electrolysis tank to outside of the electrolysis tank without guiding water present at a lower position than the predetermined height to outside of the electrolysis tank.

In the electrolysis apparatus of the above [5], supernatant water present at a higher position than a predetermined height can be led to outside, and deposits falling to a lower position than the predetermined height can be less likely to be led to outside of the electrolysis tank.

[6] The electrolysis apparatus for aquatic organism aquaculture described in [5], wherein
the predetermined height is a higher position than a lower end of the electrode section.

In the electrolysis apparatus of the above [6], deposits separated from the electrode section and falling downward from the lower end are less likely to be led to outside of the electrolysis tank.

[7] The electrolysis apparatus for aquatic organism aquaculture described in any one of [1] to [6], further comprising an electrolysis tank configured such that the rearing water is stored or flows therein, wherein
inside of the electrolysis tank is the region,
the electrode section is located on a water surface side of the rearing water in the electrolysis tank, and
the electrolysis apparatus further comprises a water flow generation section configured to cause the rearing water introduced into the electrolysis tank from outside of the electrolysis tank to flow so as to rise from a lower side to an upper side of the electrode section in the electrolysis tank.

In the electrolysis apparatus of the above [7], water flow can be generated so as to rise from the lower side to the upper side of the electrode section in the electrolysis tank. Thus, fresh rearing water is readily led to the electrode section, so that efficiency of electrolysis can be further enhanced.

[8] The electrolysis apparatus for aquatic organism aquaculture described in any one of [1] to [7], wherein
the voltage application section regularly switches between an operation of performing electrolysis of the rearing water while continuing the first state and an operation of performing electrolysis of the rearing water while continuing the second state.

In the electrolysis apparatus of the above [8], deposits can be regularly separated and thus the electrodes can be regularly cleaned.

[9] A circulation-type water treatment system for aquatic organism aquaculture, comprising:
the electrolysis apparatus for aquatic organism aquaculture described in any one of [1] to [8];
a removal section configured to remove at least solids in a first region in which the rearing water sent from the rearing tank is stored or flows;
the electrolysis section configured to perform the electrolysis of the rearing water in a second region which is the region in which the rearing water having passed through the first region is stored or flows; and
an activated carbon section configured to remove at least residual chlorine by activated carbon in a third region in which the rearing water having passed through the second region is stored or flows.

In the circulation-type water treatment system of the above [9], in the circulation-type water treatment system, solids contained in rearing water in the first region can be removed by the removal section. Further, in the circulation-type water treatment system, ammonia or ammonium ions can be decomposed by the electrolysis section in the second region after passage through the first region, and electrolysis of rearing water is performed after solids are removed by the removal section, whereby solids can be assuredly prevented from hampering electrolysis and thus electrolysis can be favorably performed. Further, the circulation-type water treatment system can remove residual chlorine by activated carbon in the third region in which rearing water having passed through the second region is stored or flows. Therefore, even if a chloric acid compound that has not been used for decomposition of ammonia or ammonium ions is contained in the rearing water in the third region, the chloric acid compound can be effectively removed by the activated carbon section. As described above, in the circulation-type water treatment system 1, solids such as excrement and residual feed have been assuredly reduced in rearing water after passage through the third region, and nitrogen compound components such as ammonia, ammonium ions, nitrous acid, and nitric acid are also assuredly reduced, thus providing a significant advantage in terms of purifying rearing water and making rearing water harmless.

[10] A circulation-type water treatment system for aquatic organism aquaculture, comprising:
the electrolysis apparatus for aquatic organism aquaculture described in any one of [1] to [8];
an electrolysis tank configured such that the rearing water is stored or flows therein; and
a reaction tank configured such that the rearing water discharged from the electrolysis tank is stored or flows in the reaction tank, wherein
inside of the electrolysis tank is the region,
the electrolysis tank includes a first guide path configured to guide water present at a higher position than a first height in the electrolysis tank to outside of the electrolysis tank without guiding water present at a lower position than the first height to outside of the electrolysis tank, and
the reaction tank includes a second guide path configured to guide water present at a higher position than a second height in the reaction tank to outside of the reaction tank without guiding water present at a lower position than the second height to outside of the reaction tank.

In the circulation-type water treatment system of the above [10], supernatant water present at a higher position than the first height in the electrolysis tank can be led to outside of the electrolysis tank. Therefore, when deposits are separated from the electrode and falls, the deposits are less likely to be led to outside of the electrolysis tank. Even if some of the deposits are discharged from the electrolysis tank and move into the reaction tank, supernatant water present at a higher position than the second height in the reaction tank can be led to outside of the reaction tank, and therefore the deposits having moved into the reaction tank are likely to settle in the reaction tank and less likely to be led to outside of the reaction tank.

[11] An electrolysis method for aquatic organism aquaculture, used in a circulation-type water treatment system including a rearing tank which is a tank for performing aquaculture of aquatic organisms and in which rearing water containing salt is stored, the circulation-type water treatment system being configured to treat the rearing water while circulating the rearing water from the rearing tank, and return the treated rearing water to the rearing tank, the electrolysis method being performed using an electrolysis section including an electrode section including a first electrode and a second electrode, and a voltage application section configured to apply voltage between the first electrode and the second electrode, the electrolysis method comprising:
applying voltage between the electrodes by the voltage application section in a state in which the first electrode and the second electrode are located in a region in which the rearing water is stored or flows, thereby performing electrolysis of the rearing water and generating a chloric acid compound, so that the generated chloric acid compound reacts with ammonia or ammonium ions in the rearing water, thereby decomposing ammonia or ammonium ions in the rearing water; and
by the voltage application section, switching between a first state of performing the electrolysis in the region by applying voltage with the first electrode as an anode and the second electrode as a cathode, and a second state of applying voltage with the second electrode as an anode and the first electrode as a cathode.

In the electrolysis method of the above [11], by performing electrolysis of rearing water containing salt, a chloric acid compound (e.g., sodium hypochlorite) is generated, so that the chloric acid compound reacts with ammonia or ammonium ions present in the rearing water, whereby ammonia or ammonium ions can be directly decomposed to nitrogen, and in the decomposition process, generation of nitrous acid, nitric acid, and the like can be assuredly prevented. However, in a case of adopting the above method, without taking any measure, there is a concern that deposits are deposited on the surfaces of the electrodes and thus hampers electrolysis. In the above electrolysis method, it is possible to switch between a first state of performing electrolysis by applying voltage with the first electrode as an anode and the second electrode as a cathode, and a second state of applying voltage with the second electrode as an anode and the first electrode as a cathode. Therefore, the deposits deposited on the surfaces of the electrodes through continuous electrolysis can be easily separated from the electrodes by switching. Thus, with the electrolysis method, deposits deposited on the surfaces of the electrodes can be easily removed.

[12] The electrolysis method for aquatic organism aquaculture described in [11], wherein an electrolysis tank configured such that the rearing water is stored or flows therein is used, the electrode section is provided such that inside of the electrolysis tank is the region, and the electrolysis method further comprises performing an operation in the first state, an operation in the second state, and switching between the first state and the second state by the voltage application section, while performing replacement of the rearing water by continuing introduction of the rearing water into the electrolysis tank and discharge of the rearing water from the electrolysis tank.

In the electrolysis method of the above [12], it is possible to perform an operation in the first state, an operation in the second state, and switching between the first state and the second state, while performing replacement of rearing water by continuing introduction of rearing water into the electrolysis tank and discharge of rearing water from the electrolysis tank. Thus, it is possible to clean the electrodes while more efficiently circulating rearing water.

[13] The electrolysis method for aquatic organism aquaculture described in [11] or [12], further comprising, by the voltage application section, regularly switching between an operation of performing electrolysis of the rearing water while continuing the first state and an operation of performing electrolysis of the rearing water while continuing the second state.

In the electrolysis method of the above [13], deposits can be regularly separated and thus the electrodes can be regularly cleaned.

### <First Embodiment>

### 1. Outline of Circulation-Type Water Treatment System 1 Used for Aquatic Organism Aquaculture

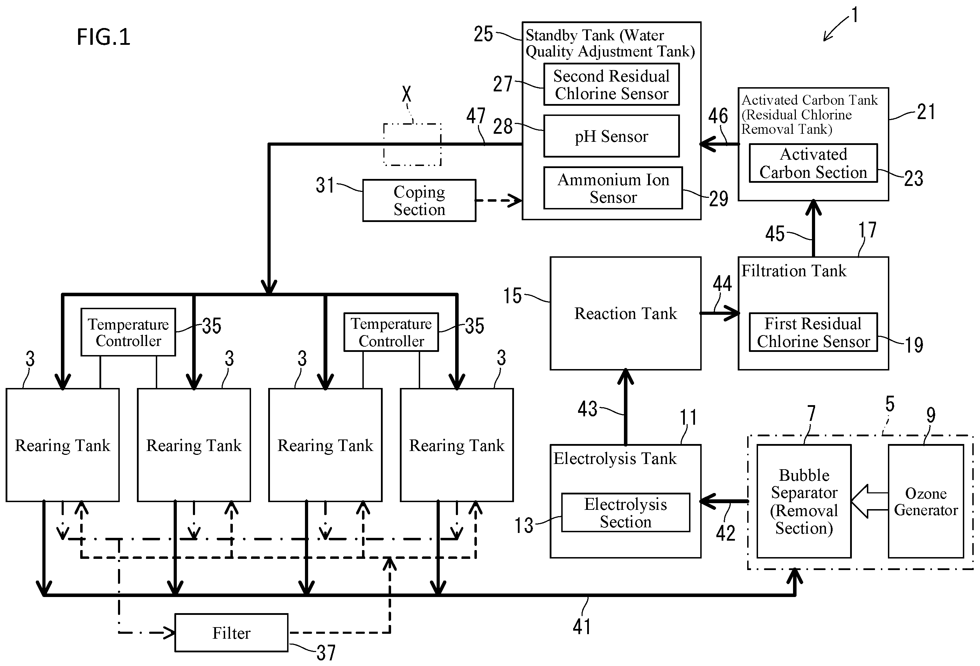

A circulation-type water treatment system 1 exemplified in FIG. 1 is a system used for aquatic organism aquaculture. The circulation-type water treatment system 1 is configured as a closed recirculation aquaculture system to perform circulation such that rearing water in a rearing tank 3 storing rearing water containing salt is treated outside the rearing tank 3 and then the treated rearing water returns to the rearing tank 3, thus recycling water. In a case of performing aquaculture of aquatic organisms in the rearing tank 3, the circulation-type water treatment system 1 operates such that, while the aquatic organisms are continuously reared inside the rearing tank 3, residual feed left in the rearing water and excreta excreted by the organisms during rearing in the rearing tank 3 are decomposed and purified through a process in which water is circulated from the rearing tank 3 and then is returned to the rearing tank 3 again.

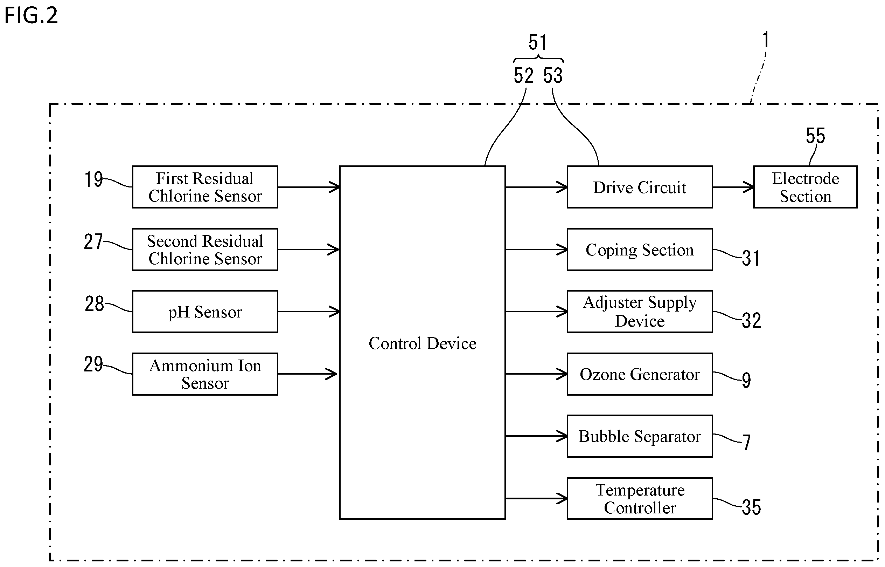

As shown in FIG. 1, the circulation-type water treatment system 1 mainly includes the rearing tank 3, a removal section 5, an electrolysis tank 11, a reaction tank 15, a filtration tank 17, an activated carbon tank 21, a standby tank (water quality adjustment tank) 25, a coping section 31, and the like. Further, the circulation-type water treatment system 1 includes a temperature controller 35, a filter 37, and the like. An electrical configuration of the circulation-type water treatment system 1 is as shown in FIG. 2, for example. Various kinds of aquatic organisms can be reared inside the rearing tank 3, and preferable examples of aquatic organisms are fish, crustaceans, and shellfish. Other kinds of aquatic organisms (e.g., squid and octopus) may be reared.

### 2. Configurations and Operations of Components

### (Rearing Tank)

The rearing tank 3 shown in FIG. 1 is a tank for rearing aquatic organisms and performing aquaculture thereof. Rearing water containing salt, such as artificial seawater or natural seawater, is stored inside the rearing tank 3, and aquatic organisms such as fish and shellfish are reared in the rearing water. Desirably, the "rearing water containing salt", stored in the rearing tank 3, is a liquid containing 0.5% by mass or more of NaCl. In the example shown in FIG. 1, a plurality of (e.g., four) rearing tanks 3 are provided, the rearing water in the rearing tanks 3 is led to be collected into the filter 37 and is filtered through the filter 37, and then the filtered water is distributed from the filter 37 to the plurality of rearing tanks 3, thus being internally circulated. The temperature of the rearing water in each rearing tank 3 is adjusted at a desired set temperature by the temperature controller 35. In the example shown in FIG. 1, the plurality of rearing tanks 3 are used, but a single water tank may be used.

### (Removal Section)

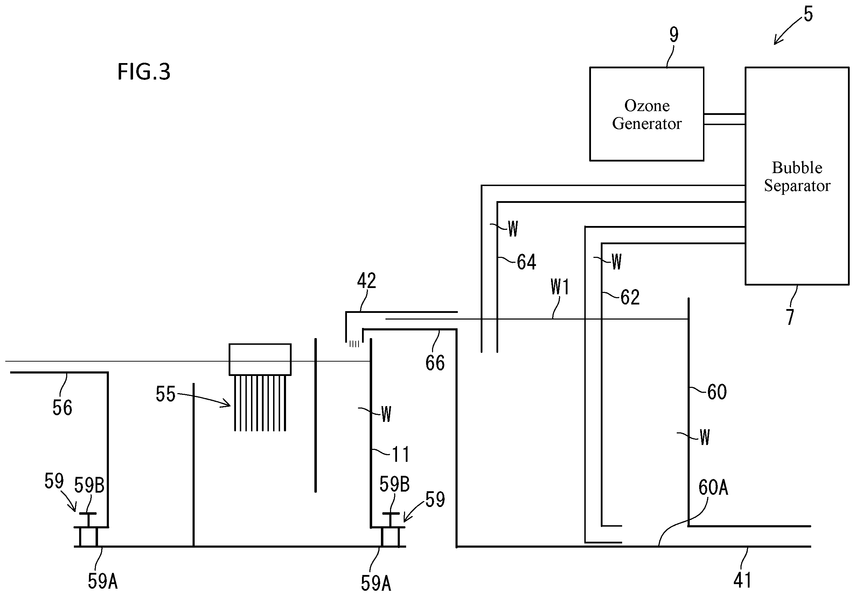

The removal section 5 shown in FIG. 1 functions to remove at least solids in a first region in which rearing water sent from the rearing tank 3 is stored or flows. The rearing water in the rearing tank 3 is led through a channel 41 to the removal section 5. As shown in FIG. 3, the removal section 5 includes an ozone generator 9, a bubble separator 7, a reservoir tank 60, an introduction section 62, a lead-out section 64, and a discharge section 66. In FIG. 3 and the like, reference character W conceptually indicates a part of circulating rearing water.

The reservoir tank 60 is a tank for storing rearing water introduced from a region of a process preceding the removal section 5. In the example shown in FIG. 1, the region of the process preceding the removal section 5 is a region in the rearing tank 3. As a method for causing the rearing water to flow from the rearing tank 3 to the reservoir tank 60, the rearing water may be caused to flow using a pump or may be caused to flow using a height difference.

The ozone generator 9 corresponds to an example of an ozone generation section. The ozone generator 9 generates ozone by a known method, for example, and supplies the generated ozone to the bubble separator 7. A method for introducing ozone from the ozone generator 9 into the bubble separator 7 is not particularly limited, but, for example, ozone generated from the ozone generator 9 may be supplied through an introduction port for introducing air, which is provided to a bubble generation section of a known bubble separator. The bubble separator 7 generates bubbles containing ozone generated by the ozone generator 9, and operates so that solids contained in the rearing water in the first region in which the rearing water sent from the rearing tank 3 is stored or flows adsorbs to the bubbles. In the example shown in FIG. 3, the first region is an internal region of the reservoir tank 60.

The introduction section 62 is a channel through which rearing water stored in the reservoir tank 60 is introduced into the bubble separator 7. The lead-out section 64 is a channel through which rearing water having passed through the bubble separator 7 is returned from the bubble separator 7 to the reservoir tank 60. The discharge section 66 has a channel for discharging rearing water stored in the reservoir tank 60 to a region of a process subsequent to the removal section 5. In the examples shown in FIG. 1 and FIG. 3, the region of the process subsequent to the removal section 5 is a region in the electrolysis tank 11.

In the removal section 5, solids such as excrement and residual feed, removal protein of metabolite of fish and shellfish, bacteria, viruses, parasites, and the like contained in rearing water introduced into the bubble separator 7 are adsorbed to fine bubbles generated in the bubble separator 7 and thus are removed from the rearing water. In addition, bubbles generated in the bubble separator 7 contain ozone and therefore have high sterilization power. The sterilization power acts on also rearing water passing through the bubble separator 7 and returning to the lead-out section 64. Through such operation, contaminants are assuredly prevented from flowing out to the electrolysis tank 11 in the subsequent process, and thus contaminants are assuredly prevented from hampering electrolysis in the electrolysis tank 11.

In the example shown in FIG. 3, the channel 41 is connected near a bottom 60A of the reservoir tank 60, and rearing water from the channel 41 is supplied into the reservoir tank 60 from a position close to the lower end of a side portion of the reservoir tank 60. An introduction port (an inlet for taking in rearing water) of the introduction section 62 is located at a position close to the bottom 60A in the reservoir tank 60, and thus can easily take in the rearing water that has just been introduced into the reservoir tank 60 from the channel 41. On the other hand, rearing water having passed through the bubble separator 7 is led out through the lead-out section 64 to a position closer to the discharge section 66 than to the channel 41. A discharge port (an outlet for discharging rearing water) of the lead-out section 64 is located at a position closer to a water surface W1 than to the bottom 60A of the reservoir tank 60. The discharge section 66 is formed as a channel through which rearing water in the reservoir tank 60 flows to outside of the reservoir tank 60. The discharge section 66 is configured to guide water present at a higher position than a predetermined first height in the reservoir tank 60 to outside of the reservoir tank 60 without guiding water present at a lower position than the first height to outside of the reservoir tank 60. The first height is a height of a lower end of a boundary between the reservoir tank 60 and a channel inner wall surface of the discharge section 66. When the water surface of rearing water in the reservoir tank 60 is higher than the first height, water in a higher region than the first height is discharged through the discharge section 66.

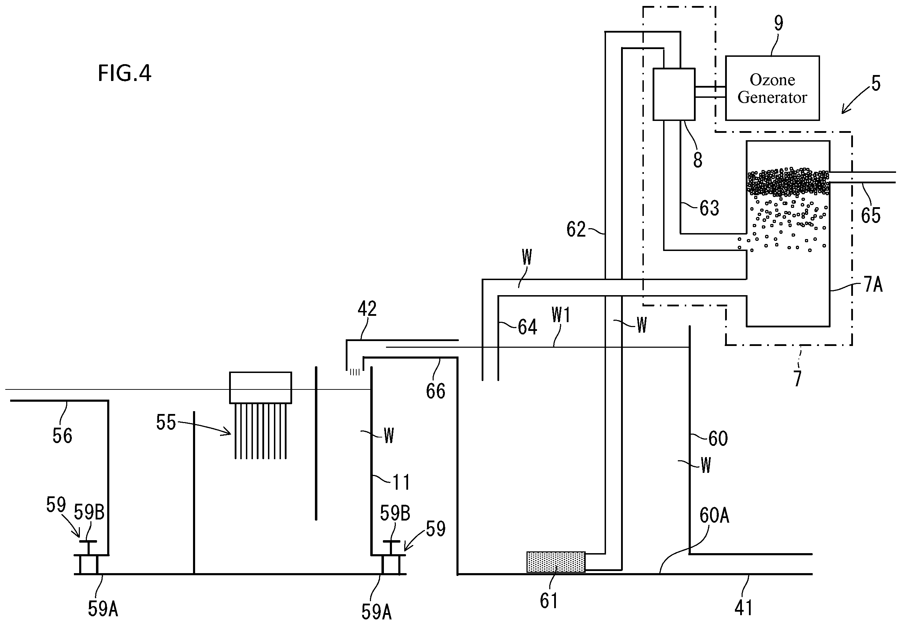

More specifically, the removal section 5 shown in FIG. 3 can be configured as shown in FIG. 4. In a specific example shown in FIG. 4, a bubble generation section 8 and a bubble separation tank 7A are provided in the bubble separator 7. Further, an introduction port (intake port) of the introduction section 62 formed as a pipe is located at a position near the bottom of the reservoir tank 60 and close to the channel 45 in the reservoir tank 60. A filter 61 is provided so as to cover the introduction port. Of the rearing water stored in the reservoir tank 60, rearing water that can pass through the filter 61 is introduced into the bubble separator 7 through the introduction section 62. The filter 61 is configured to block passage of an object having a large particle size and allow passage of an object having a small particle size, and is formed in a mesh shape, for example. Although not shown in FIG. 4, a pump for causing the rearing water to flow into the bubble separator 7 through the introduction section 62 may be provided.

In the configuration shown in FIG. 4, the bubble generation section 8 injects air containing ozone generated by the ozone generator 9 into rearing water flowing from the introduction section 62 so that bubbles of air containing ozone are contained in the rearing water passing through the bubble generation section 8. The rearing water having passed through the bubble generation section 8 flows, as rearing water containing bubbles containing ozone, into the bubble separation tank 7A through the introduction section 63 formed as a pipe. In the bubble separation tank 7A, bubbles with solids adsorbed thereto are separated so as to be collected near the water surface, and the collected bubbles are discharged through a discharge channel 65 to outside of the bubble separation tank 7A. On the other hand, rearing water on the lower side of the bubble separation tank 7A is discharged to a position near the water surface in the reservoir tank 60 through the lead-out section 64 formed as a pipe. The outlet (discharge port) of the lead-out section 64 is provided so that a vortex is generated in a certain direction in the rearing water stored in the reservoir tank 60. The discharge section 66 formed as a channel for discharge is located near the water surface of the reservoir tank 60 so that supernatant of the rearing water stored in the reservoir tank 60 is discharged through the discharge section 66.

### (Electrolysis Tank)

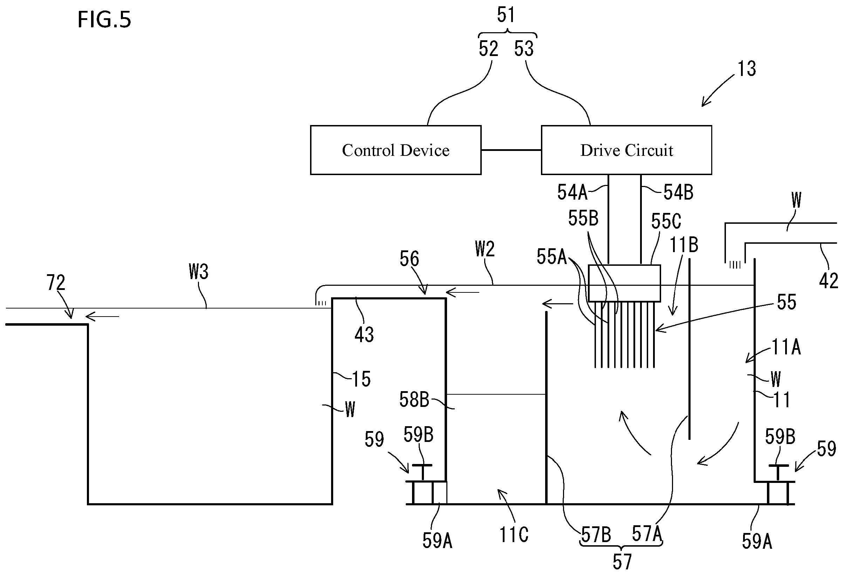

The electrolysis tank 11 shown in FIG. 5 is a tank for performing electrolysis and is a tank in which rearing water having passed through the removal section 5 is stored or flows. The internal region of the electrolysis tank 11 is a region in which rearing water having passed through the first region (in the example shown in FIG. 3, the region in the reservoir tank 60) is stored or flows, and corresponds to an example of a second region. An electrolysis section 13 is provided to the electrolysis tank 11. In the second region, the electrolysis section 13 performs electrolysis of rearing water to generate a chloric acid compound (e.g., sodium hypochlorite) so that the generated chloric acid compound reacts with ammonia or ammonium ions in the rearing water, thus decomposing ammonia or ammonium ions. Further, in the electrolysis tank 11, since a chloric acid compound is generated by the electrolysis section 13, sterilization, deodorization, and decolorization of the rearing water can be performed.

In the electrolysis tank 11, electrolysis shown by the following Formula (1) is performed.

2NaCl+3H₂O→NaClO+NaCl+2H₂O+H₂↑··· (1)

Then, decomposition of ammonia or decomposition of ammonium ions is performed through a chemical reaction shown by the following Formulae (2) and (3).

2NH₃+3NaClO→N₂↑+3NaCl+3H₂O··· (2)

2NH₄⁺+3NaClO→N₂↑+3H₂O+3NaCl+2H⁺··· (3)

In the electrolysis tank 11 shown in FIG. 5, the internal region of the electrolysis tank 11 is a "region" in which an electrode section 55 is provided and electrolysis is performed. In the electrolysis tank 11, the electrolysis section 13 is provided. The electrolysis section 13 includes the electrode section 55 provided in the above "region" (second region) and having a first electrode 55A and a second electrode 55B, and a voltage application section 51 which applies voltage between the first electrode 55A and the second electrode 55B.

The voltage application section 51 includes a control device 52 and a drive circuit 53. The control device 52 is an information processing device including an information processing section, a memory section, a communication section, and the like, and is a device that can perform various controls and various calculations. The drive circuit 53 is a circuit that applies voltage between the first electrode 55A and the second electrode 55B in accordance with an instruction from the control device 52.

The electrode section 55 includes an electrode holding portion 55C holding the first electrode 55A and the second electrode 55B, and the first electrode 55A, the second electrode 55B, and the electrode holding portion 55C are formed integrally. The integrally formed electrode section 55 is attached/detached to/from the electrolysis tank 11. The configuration that allows the electrode section 55 to be attached/detached to/from the electrolysis tank 11 is not particularly limited, but may be such a configuration that, at the time of attachment, the electrode holding portion 55C is placed at a placement base provided to the electrolysis tank 11, and at the time of detachment, the electrode holding portion 55C is separated from the placement base, for example. In the example shown in FIG. 5, a plurality of first electrodes 55A and a plurality of second electrodes 55B are provided, and the plurality of first electrodes 55A and the plurality of second electrodes 55B are each formed in a plate shape by a metal material. In the electrode section 55, the first electrodes 55A and the second electrodes 55B are alternately arranged with intervals therebetween. The plurality of first electrodes 55A are configured so as to be shortcircuited with each other, and are electrically connected to a first terminal of the drive circuit 53 via an electric path 54A. The plurality of second electrodes 55B are configured so as to be shortcircuited with each other, and are electrically connected to a second terminal of the drive circuit 53 via an electric path 54B. In the example shown in FIG. 5, the first electrodes 55A and the second electrodes 55B are alternately arranged with intervals therebetween.

Desirably, the electrodes used in the electrolysis tank 11 are made of a metal material that is not corroded by seawater and exhibits high efficiency in generation of a chloric acid compound. For example, electrodes obtained by coating the surface of titanium with platinum-iridium alloy can be preferably used. Platinum is high in electrical conductivity and corrosion resistance, iridium is high in durability and chemical stability, and platinum-iridium alloy has a property that the surface thereof is uniform and smooth. The electrodes obtained by coating the surface of titanium with platinum-iridium alloy can be used for both of an anode and a cathode. The electrodes described here are merely an example, and if an electrode inversion method described later is not used, an electrode obtained by coating titanium with ruthenium, or the like, may be used as an anode, or another material may be used.

A part or the entirety of the electrode section 55 is located on a water surface W2 side of rearing water in the electrolysis tank 11 so that rearing water is interposed between the first electrode 55A and the second electrode 55B. Meanwhile, a water flow generation section 57 is provided to the electrolysis tank 11 so that water flow from the lower side of the electrode section 55 toward the upper side (electrode section side) is generated by the water flow generation section 57.

The water flow generation section 57 has such a structure that rearing water introduced into the electrolysis tank 11 through the channel 42 from outside of the electrolysis tank 11 flows so as to rise from the lower side to the upper side of the electrode section 55 in the electrolysis tank 11. The channel 42 is a channel through which rearing water discharged through the discharge section 66 flows into the electrolysis tank 11, and may be formed by the discharge section 66 or may be formed as a channel contiguous to the discharge section 66. The water flow generation section 57 has a first partition wall 57A. The first partition wall 57A is a wall serving as a partition between a predetermined upstream region and a predetermined downstream region in the electrolysis tank 11. The downstream region is a region on the downstream side with respect to the first partition wall 57A and is a region in which the electrode section 55 is provided. The upstream region is a region on the upstream side with respect to the first partition wall 57A and on the upstream side with respect to the downstream region.

In the example shown in FIG. 5, the upstream region is an internal region of a first rearing water flowing chamber 11A formed by the first partition wall 57A and parts of an outer peripheral wall and a bottom wall 11Z of the electrolysis tank 11 that are on the upstream side with respect to the first partition wall 57A, and is a region into which rearing water flows from the channel 42. The first rearing water flowing chamber 11A has, on the bottom wall side, an opening through which rearing water in the first rearing water flowing chamber 11A moves to the second rearing water flowing chamber. In the example shown in FIG. 5, the opening is formed by a lower end of the first partition wall 57A and the outer peripheral wall and the bottom wall 11Z of the electrolysis tank 11.

The downstream region is an internal region of the second rearing water flowing chamber 11B formed by the first partition wall 57A, the second partition wall 57B, and parts of the outer peripheral wall and the bottom wall 11Z of the electrolysis tank 11 that are between the first partition wall 57A and the second partition wall 57B, and is a region in which a part or the entirety of the electrode section 55 is located. In the second rearing water flowing chamber 11B, the height of an upper end of the second partition wall 57B is lower than the height of an upper end of the outer peripheral wall of the electrolysis tank 11, so that, when water beyond the upper end of the second partition wall 57B flows into the second rearing water flowing chamber 11B, water flows over the second partition wall 57B to the downstream side of the second rearing water flowing chamber 11B. With this configuration, in the second rearing water flowing chamber 11B, rearing water is introduced from the opening on the lower side and then is led out so as to flow over the upper end of the second partition wall 57B. Therefore, flow of rearing water is generated so as to rise from the lower side of the electrode section 55 toward the electrode section 55 side.

In the example shown in FIG. 5, the second partition wall 57B is provided, but the second partition wall 57B may not be provided. In this case, the entirety on the downstream side with respect to the first partition wall 57A in the electrolysis tank 11 is the downstream region, and the second rearing water flowing chamber 11B is formed by the first partition wall 57A and parts of the outer peripheral wall and the bottom wall 11Z of the electrolysis tank 11 that are on the downstream side with respect to the first partition wall 57A.

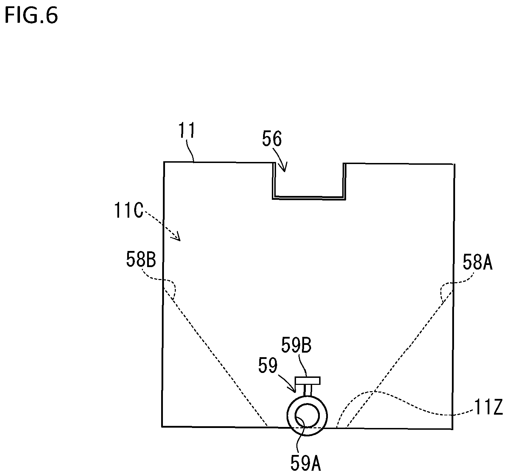

As shown in FIG. 6, a guide section 58 is provided to the electrolysis tank 11. The guide section 58 functions to guide and collect deposits falling from the electrode section 55 in the electrolysis tank 11, toward a predetermined position in the electrolysis tank 11. In the examples shown in FIG. 5 and FIG. 6, the predetermined position is a position on the upper side of a part of the bottom wall 11Z. In the examples shown in FIG. 5 and FIG. 6, on the downstream side with respect to the second rearing water flowing chamber 11B, a third rearing water flowing chamber 11C is formed by the second partition wall 57B and parts of the outer peripheral wall and the bottom wall 11Z of the electrolysis tank 11 that are on the downstream side with respect to the second partition wall 57B, and a position on the upper side of a part of the bottom wall 11Z in the third rearing water flowing chamber 11C is the predetermined position. The guide section 58 includes slope portions 58A having slope surfaces sloped with respect to the up-down direction. The slope surfaces of the slope portions 58A and 58B form inner wall surfaces of the third rearing water flowing chamber 11C, so that, when an object (e.g., deposit) sinking in the third rearing water flowing chamber 11C has reached the slope surface of the slope portion 58A, the object is guided by the slope surface while further sinking, and thus is led to the vicinity of the predetermined position on the bottom wall 11Z. The slope surfaces of the slope portions 58A and 58B guide objects sinking along the slope surfaces so that the objects move in a predetermined first direction perpendicular to the up-down direction (specifically, so that the objects move toward a discharge section 59 side in the first direction).

As shown in FIG. 5 and FIG. 6, the discharge section 59 is provided to the electrolysis tank 11. In the example shown in FIG. 5, the discharge sections 59 are provided at two locations. However, without limitation to this example, the number of the discharge sections 59 may be one or may be three or more. Each discharge section 59 includes a pipe 59A through which deposits having fallen from the electrode section 55 in the electrolysis tank 11 are discharged, and an open/close portion 59B that opens/closes the pipe 59A. The discharge section 59 functions to take deposits into the pipe 59A at a lower position than the electrode section 55 and discharge the deposits through the pipe 59A from the electrolysis tank 11.

In the examples shown in FIG. 5 and FIG. 6, the open/close portion 59B is an open/close plug for switching between a state of shutting the pipe 59A and a state of opening the pipe 59A by a manual operation, for example. The open/close portion 59B may be a solenoid valve which is switched to be opened/closed through control, or the like. In any case, when the open/close portion 59B is opened, rearing water is discharged through the pipe 59A from the vicinity of a predetermined position in the electrolysis tank 11. When deposits are settled in the vicinity of the predetermined position, the deposits are discharged through the pipe 59A together with the rearing water. In the examples shown in FIG. 5 and FIG. 6, the pipe 59A is a fixed pipe permanently installed to the electrolysis tank 11, but may be a pipe that is attachable and detachable to and from the electrolysis tank 11. Discharging through the pipe from the vicinity of the predetermined position may be performed using the water pressure in the electrolysis tank 11 or may be performed through suction or flow caused by a pump or the like.

As shown in FIG. 5 and FIG. 6, a first guide path 56 is provided to the electrolysis tank 11. The first guide path 56 corresponds to an example of a guide path. The first guide path 56 functions as a channel so as to guide water present at a higher position than the first height in the electrolysis tank 11 to outside of the electrolysis tank 11 without guiding water present at a lower position than the first height to outside of the electrolysis tank 11. The first height corresponds to an example of a predetermined height. In the example shown in FIG. 5, the water surface W2 of rearing water in the electrolysis tank 11 is higher than a lower end position of a channel inner wall surface at an inlet of the first guide path 56 (a boundary with the first guide path 56, which is an outlet of the electrolysis tank 11), so that water near the water surface of rearing water in the electrolysis tank 11 flows into the first guide path 56 over the height of the bottom of the first guide path 56. In the example shown in FIG. 5, the height of the lower end of the channel inner wall surface at the inlet of the first guide path 56 is the first height (predetermined height), and the first height (predetermined height) is higher than the lower end of the electrode section 55. The height of the lower end of the electrode section 55 is a height of the lowest position of the plurality of first electrodes 55A and the plurality of second electrodes 55B. The first guide path 56 functions to cause rearing water in the electrolysis tank 11 to flow toward the reaction tank 15.

### (Reaction Tank)

The reaction tank 15 is a tank in which rearing water supplied through the channel 43 from the electrolysis tank 11 is stored, a reaction period for ammonia or ammonium ions contained in the stored rearing water and a chloric acid compound (e.g., sodium hypochlorite) generated in the electrolysis tank 11 is ensured, and a chemical reaction therebetween is promoted. The channel 43 may be formed by the first guide path 56 or may be formed as a channel contiguous to the first guide path 56. In a case where ammonia or ammonium ions present in rearing water in the electrolysis tank 11 have not fully reacted with the chloric acid compound in the electrolysis tank 11 and the remaining ammonia or ammonium ions flow out from the electrolysis tank 11, and the chloric acid compound generated in the electrolysis tank 11 has not fully reacted and the remaining chloric acid compound flows out from the electrolysis tank 11, one or both of chemical reactions shown by the above formulae (2) and (3) occur in the reaction tank 15, so that ammonia or ammonium ions are decomposed.

As shown in FIG. 5, a second guide path 72 is provided to the reaction tank 15. The second guide path 72 functions as a channel so as to guide water present at a higher position than a second height in the reaction tank 15 to outside of the reaction tank 15 without guiding water present at a lower position than the second height to outside of the reaction tank 15. In the example shown in FIG. 5, a water surface W3 of rearing water in the reaction tank 15 is higher than a lower end position of a channel inner wall surface at an inlet of the second guide path 72 (a boundary with the second guide path 72, which is an outlet of the reaction tank 15), so that water near the water surface of rearing water in the reaction tank 15 flows into the second guide path 72 over the height of the bottom of the second guide path 72. In the example shown in FIG. 5, the height of the lower end of the channel inner wall surface at the inlet of the second guide path 72 is the second height. The second guide path 72 functions to cause rearing water in the reaction tank 15 to flow toward a process subsequent to the reaction tank 15.

For the process subsequent to the reaction tank 15, the filtration tank 17 constituting a detection region for detecting residual chlorine is provided. The filtration tank 17 is a part in which rearing water supplied through the channel 44 from the reaction tank 15 is stored and then is led out to a channel 45. The channel 44 is a channel through which rearing water discharged through the second guide path 72 flows into the filtration tank 17, and may be formed by the second guide path 72 or may be formed as a channel contiguous to the second guide path 72. In the example shown in FIG. 1, a channel for leading rearing water from the reaction tank 15 to the activated carbon tank 21 is formed by the channel 44, the filtration tank 17, and the channel 45, but another structure (e.g., such a structure that a pipe extends from the reaction tank 15 to the activated carbon tank 21 without providing the filtration tank 17) may be used as long as the structure allows rearing water to flow from the reaction tank 15 to the activated carbon tank 21.

A first residual chlorine sensor 19 is a sensor for detecting the concentration of residual chlorine contained in rearing water until flowing into the residual chlorine removal tank (specifically, the activated carbon tank 21) after having passed through the electrolysis tank 11, and detects the concentration of residual chlorine contained in the rearing water in a region in which the rearing water flows between the reaction tank 15 and the activated carbon tank 21, for example. In the representative example shown in FIG. 1, the first residual chlorine sensor 19 detects residual chlorine contained in the rearing water in the filtration tank 17. As used herein, the residual chlorine refers to combined chlorine and free chlorine remaining in the rearing water. The total chlorine amount of the amount of combined chlorine and the amount of free chlorine contained in the rearing water is a residual chlorine amount. The first residual chlorine sensor 19 detects residual chlorine contained in the rearing water in the region between the reaction tank 15 and the activated carbon tank 21, whereby the amount of the chloric acid compound remaining after decomposition of ammonia or ammonium ions in the electrolysis tank 11 and the reaction tank 15 can be measured.

### (Residual Chlorine Removal Tank)

In the example shown in FIG. 5, the activated carbon tank 21 is provided as an example of the residual chlorine removal tank. The residual chlorine removal tank is a tank for removing at least residual chlorine from the rearing water, and functions to remove residual chlorine from rearing water by causing the rearing water to pass through a residual chlorine removing section. The activated carbon tank 21 exemplified in FIG. 5 is a tank in which the rearing water having passed through the reaction tank 15 is stored, and specifically, is a tank provided on the downstream side with respect to the detection region in which the first residual chlorine sensor 19 is provided (in the example shown in FIG. 1, a region in the filtration tank 17). The activated carbon tank 21 functions as a tank for removing a chloric acid compound (e.g., sodium hypochlorite) generated in the electrolysis tank 11, and the like. An activated carbon section 23 including activated carbon is provided to the activated carbon tank 21, and the activated carbon section 23 corresponds to an example of the residual chlorine removing section. The activated carbon section 23 removes at least residual chlorine and residual ozone from rearing water in the activated carbon tank 21 by activated carbon. In the example shown in FIG. 1, an internal region of the activated carbon tank 21 corresponds to an example of a third region, and is a region in which the rearing water having passed through the second region is stored or flows.

In the activated carbon tank 21, a surplus chloric acid compound that has not been used in decomposition of ammonia or ammonium ions can be removed through a reaction as shown by the following Formula (4), for example.

HClO+C→CO+H⁺+Cl⁻··· (4)

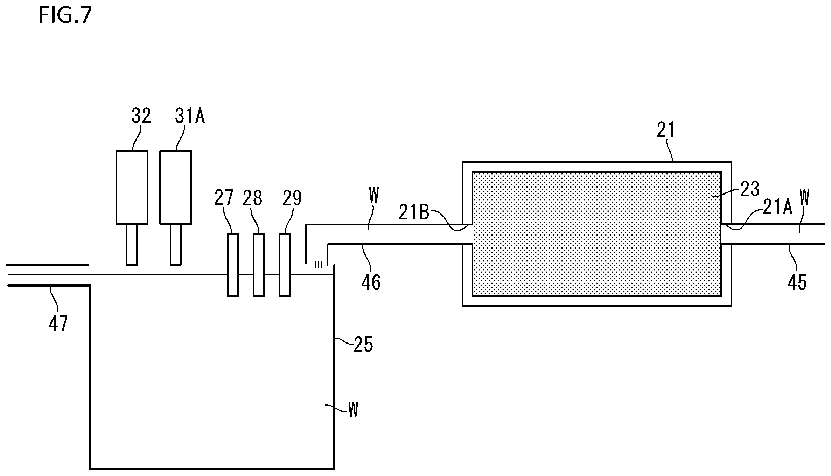

The activated carbon tank 21 exemplified in FIG. 5 can be configured as shown in FIG. 7, for example. In the example shown in FIG. 7, the activated carbon tank 21 is formed as a channel through which rearing water passes, and in the internal space of the channel, the activated carbon section 23 is formed with particles of activated carbon loaded therein. The activated carbon tank 21 is configured such that rearing water flows through gaps in the activated carbon section 23 (specifically, gaps in the internal space in which particles of activated carbon are loaded), and in a process in which rearing water flowing from the inlet 21A of the activated carbon tank 21 passes through gaps between multiple particles in the activated carbon tank 21, residual chlorine and residual ozone contained in the rearing water adsorb to activated carbon, so that rearing water discharged from the outlet 21B becomes rearing water from which a part or the entirety of chlorine and ozone has been removed.

### (Standby Tank)

The rearing water introduced into the activated carbon tank 21 from the channel 45 passes through the internal region of the activated carbon tank 21 and is discharged to the channel 46. Then, the rearing water passes through the channel 46 and flows into the standby tank 25. The standby tank 25 is a tank in which the rearing water having passed through the activated carbon tank 21 is stored and the water quality of the rearing water before returning to the rearing tank 3 is examined. The internal region of the standby tank 25 corresponds to an example of a fourth region, and is a region in which the rearing water having passed through the above third region is stored or flows before returning to the rearing tank 3.

A second residual chlorine sensor 27 is a sensor for detecting the concentration of residual chlorine contained in rearing water in the fourth region in which the rearing water having passed through the above third region is stored or flows before returning to the rearing tank 3. In the example shown in FIG. 1, the second residual chlorine sensor 27 detects the concentration of residual chlorine contained in rearing water in the standby tank 25. When residual chlorine flows out for a reason such as deterioration of activated carbon provided in the activated carbon section 23, the second residual chlorine sensor 27 can more accurately detect variation in the concentration of the residual chlorine having flowed out.

An ammonium ion sensor 29 is a sensor for detecting the concentration of ammonium ions contained in rearing water in the fourth region in which the rearing water having passed through the above third region is stored or flows before returning to the rearing tank 3. In the example shown in FIG. 1, the ammonium ion sensor 29 detects the concentration of ammonium ions contained in the rearing water in the standby tank 25. When ammonium ions have not fully reacted in the electrolysis tank 11 and the reaction tank 15 and thus some ammonium ions remain, the ammonium ion sensor 29 can more accurately detect variation in the concentration of the remaining ammonium ions.

A pH sensor 28 is a sensor for measuring the pH (hydrogen ion exponent) of rearing water in the fourth region in which the rearing water having passed through the above third region is stored or flows before returning to the rearing tank 3. In the example shown in FIG. 1, the pH sensor 28 measures the pH of the rearing water in the standby tank 25, and provides a value that specifies the pH of the rearing water in the standby tank 25, to the control device 52.

In the standby tank 25, aeration is performed by an aeration device (not shown), to remove CO2 from rearing water. Then, the rearing water in the standby tank 25 flows into the rearing tank 3 through the channel 47. The operation of causing the rearing water to flow from the standby tank 25 to the rearing tank 3 via the channel 47 can be switched between a state in which the rearing water continuously flows from the standby tank 25 to the rearing tank 3 and a state in which flowing of the rearing water from the standby tank 25 to the rearing tank 3 is stopped or interrupted.

### 3. Control of Circulation-Type Water Treatment System 1

### (Configuration for Control)

In the circulation-type water treatment system 1, the rearing water in the rearing tank 3 is circulated through the removal section 5, the electrolysis tank 11, the reaction tank 15, the filtration tank 17, the activated carbon tank 21, and the standby tank 25, in this order. Pumps (not shown) for causing the rearing water to flow are provided at a plurality of locations along the circulation path through which the rearing water is circulated from the rearing tank 3 and returned to the rearing tank 3. The control device 52 shown in FIG. 2 controls driving and stop of the pumps. Further, the control device 52 controls driving and stop of the temperature controller 35, driving and stop of the ozone generator 9, driving and stop of the bubble separator 7, driving and stop of the electrolysis section 13, operation of the coping section 31, and the like.

A detected value from the first residual chlorine sensor 19, a detected value from the second residual chlorine sensor 27, a detected value from the pH sensor 28, and a detected value from the ammonium ion sensor 29 are inputted to the control device 52 shown in FIG. 2. The detected value inputted from the first residual chlorine sensor 19 is a value indicating the concentration of residual chlorine contained in rearing water in the above detection region (specifically, in the filtration tank 17). The detected value inputted from the second residual chlorine sensor 27 is a value indicating the concentration of residual chlorine contained in rearing water in the above fourth region (specifically, in the standby tank 25). The detected value inputted from the pH sensor 28 is a value indicating the pH (hydrogen ion exponent) of rearing water in the above fourth region (specifically, in the standby tank 25). The detected value inputted from the ammonium ion sensor 29 is a value indicating the concentration of ammonium ions contained in rearing water in the above fourth region (specifically, in the standby tank 25).

### (Control for Electrolysis)

The control device 52 corresponds to an example of a control section, and controls electrolysis in the electrolysis section 13. The control device 52 may control electrolysis in the electrolysis section 13 on the basis of a measurement result from the ammonium ion sensor 29 and a measurement result from the first residual chlorine sensor 19, may control electrolysis in the electrolysis section 13 on the basis of a measurement result from the ammonium ion sensor 29, or may control electrolysis in the electrolysis section 13 on the basis of a measurement result from the first residual chlorine sensor 19. In a case of controlling electrolysis in the electrolysis section 13 on the basis of a measurement result from the ammonium ion sensor 29, the control device 52 may perform feedback control of current flowing between the first electrode 55A and the second electrode 55B so that the detected value from the ammonium ion sensor 29 becomes a predetermined value or smaller, for example. In a case of controlling electrolysis in the electrolysis section 13 on the basis of a measurement result from the first residual chlorine sensor 19, the control device 52 may perform feedback control of current flowing between the first electrode 55A and the second electrode 55B so that the detected value from the first residual chlorine sensor 19 comes into a predetermined range, for example.

In a case of obtaining the ammonia concentration and the available chlorine concentration in rearing water (e.g., seawater) used in the present embodiment, the concentrations can be obtained on the basis of breakpoint chlorination. For example, in a first state in which the concentrations of ammonia and ammonium ions in the rearing water are equal to or greater than a certain concentration with respect to the concentration of available residual chlorine, as the addition amount of the chloric acid compound becomes larger, the available residual chlorine concentration increases. On the other hand, in a second state in which ammonia or ammonium ions are present but the concentrations of ammonia and ammonium ions are equal to or smaller than the certain concentration with respect to the concentration of available residual chlorine, the available residual chlorine concentration decreases even when the chloric acid compound is added, because of consumption through a reaction with ammonia or ammonium ions. Then, in a third state in which ammonia and ammonium ions are not present, as the addition amount of the chloric acid compound becomes larger, the available residual chlorine concentration increases. If the pH, the salt concentration, and the temperature of the rearing water are constant, the above certain concentration can be considered a fixed value.

The control device 52 is configured to be able to detect current flowing between the first electrode 55A and the second electrode 55B in the electrolysis section 13, and continuously monitors the current flowing between the first electrode 55A and the second electrode 55B. As the configuration for the control device 52 to monitor current flowing between the first electrode 55A and the second electrode 55B, various configurations can be adopted. For example, such a configuration that the current is detected by a current sensor and the control device 52 acquires the value detected by the current sensor may be adopted, or another configuration may be adopted. Then, the control device 52 controls current flowing between the first electrode 55A and the second electrode 55B on the basis of one or both of the detected values from the ammonium ion sensor 29 and the first residual chlorine sensor 19.

The control device 52 may perform first current control so as to control current flowing between the first electrode 55A and the second electrode 55B on the basis of both of the detected values from the ammonium ion sensor 29 and the first residual chlorine sensor 19. As the current flowing between the first electrode 55A and the second electrode 55B becomes greater, the electrolysis is more promoted, so that the generation amount of the chloric acid compound increases. Therefore, in a case of performing the first current control, the control device 52 adjusts current flowing between the first electrode 55A and the second electrode 55B so that the value (detected value) of the ammonium ion concentration detected by the ammonium ion sensor 29 becomes equal to or smaller than a first threshold. The first threshold may be 0 or may be a value slightly greater than 0. On the other hand, in a state in which ammonia and ammonium ions are not present, as the current flowing between the first electrode 55A and the second electrode 55B becomes greater, the available chlorine concentration increases. Therefore, the control device 52 adjusts current flowing between the first electrode 55A and the second electrode 55B so that the detected value from the ammonium ion sensor 29 comes into a current range not greater than the first threshold and the value (detected value) of the residual chlorine amount detected by the first residual chlorine sensor 19 comes into a current range not greater than a second threshold.

The control device 52 may perform second current control so as to control current flowing between the first electrode 55A and the second electrode 55B on the basis of the detected value from the ammonium ion sensor 29 without using the detected value from the first residual chlorine sensor 19. Also in a case of performing the second current control, the control device 52 adjusts current flowing between the first electrode 55A and the second electrode 55B so that the value (detected value) of the ammonium ion concentration detected by the ammonium ion sensor 29 becomes equal to or smaller than the first threshold. The first threshold may be 0 or a value slightly greater than 0. In a case of performing the second current control, the control device 52 repeats "current adjustment control in which current flowing between the first electrode 55A and the second electrode 55B is controlled to be a set current value and electrolysis is performed for a certain period, and then the value (detected value) of the ammonium ion concentration detected by the ammonium ion sensor 29 is confirmed". In this control, if the detected value from the ammonium ion sensor 29 has exceeded the first threshold in the last current adjustment control, next current adjustment control is performed so that a current value obtained by increasing the set current value used in the last current adjustment control by a predetermined ratio (e.g., 10%) is used as a next set current value. On the other hand, if the detected value from the ammonium ion sensor 29 is equal to or smaller than the first threshold in the last current adjustment control, next current adjustment control is performed so that the set current value used in the last current adjustment control is used as a next set current value. In this way, it is possible to perform electrolysis while gradually increasing current until the detected value from the ammonium ion sensor 29 becomes equal to or smaller than the first threshold, and when the detected value from the ammonium ion sensor 29 has become equal to or smaller than the first threshold, it is possible to perform electrolysis while keeping this current state.

The control device 52 may perform third current control so as to control current flowing between the first electrode 55A and the second electrode 55B on the basis of the detected value from the first residual chlorine sensor 19 without using the detected value from the ammonium ion sensor 29. In a case of performing the third current control, the control device 52 repeats "current adjustment control in which current flowing between the first electrode 55A and the second electrode 55B is controlled to be a set current value and electrolysis is performed for a certain period, and then the value (detected value) of the residual chlorine amount detected by the first residual chlorine sensor 19 is confirmed". In this control, in a case where the set current value in the last current adjustment control has been increased by a predetermined ratio (e.g., 10%) with respect to the set current value in the current adjustment control before last, if the value (detected value) of the residual chlorine amount detected in the last current adjustment control is smaller than the value (detected value) of the residual chlorine amount detected in the current adjustment control before last, the present state can be estimated to be the above second state. Therefore, in this case, in next current adjustment control (current adjustment control at this time), current adjustment control is performed so that a current value obtained by increasing the set current value used in the last current adjustment control by a predetermined ratio (e.g., 10%) is used as a set current value. That is, while the detected value of the residual chlorine amount is decreasing, current adjustment control at each time is performed so as to gradually increase the set current value. On the other hand, in a case where, while control of gradually increasing the set current value is being performed as described above, the set current value in the last current adjustment control has been increased by a predetermined ratio (e.g., 10%) with respect to the set current value in the current adjustment control before last, if the value (detected value) of the residual chlorine amount detected in the last current adjustment control is greater than the value (detected value) of the residual chlorine amount detected in the current adjustment control before last, the present state can be estimated to be the third state. Therefore, in this case, in next current adjustment control (current adjustment control at this time), current adjustment control is performed so that a current value obtained by decreasing the set current value used in the last current adjustment control by a predetermined ratio (e.g., 10%) is used as a set current value. In a case where the set current value in the last current adjustment control has been decreased by a predetermined ratio (e.g., 10%) with respect to the set current value in the current adjustment control before last, if the value (detected value) of the residual chlorine amount detected in the last current adjustment control is smaller than the value (detected value) of the residual chlorine amount detected in the current adjustment control before last, in next current adjustment control (current adjustment control at this time), current adjustment control may be performed so that a current value obtained by decreasing the set current value used in the last current adjustment control by a predetermined ratio (e.g., 10%) is used as a set current value, and if the value (detected value) of the residual chlorine amount detected in the last current adjustment control is greater than the value (detected value) of the residual chlorine amount detected in the current adjustment control before last, in next current adjustment control (current adjustment control at this time), current adjustment control may be performed so that a current value obtained by increasing the set current value used in the last current adjustment control by a predetermined ratio (e.g., 10%) is used as a set current value.

### (Control Based on Monitoring of Residual Chlorine)

In a case where a predetermined measurement result is obtained from the second residual chlorine sensor 27, the coping section 31 may operate so as to remove residual chlorine from rearing water in the fourth region or may operate so as to stop returning rearing water in the fourth region to the rearing tank 3.

For example, when the concentration (detected value) of the residual chlorine detected by the second residual chlorine sensor 27 has exceeded a predetermined value, the coping section 31 may supply a neutralizer to rearing water before returning to the rearing tank 3. As the neutralizer, for example, sodium thiosulfate, catechin, polyphenol, cysteine, and the like can be preferably used. In the example shown in FIG. 7, a neutralizer supply device 31A for supplying a neutralizer to rearing water in the fourth region is provided as a component composing at least a part of the coping section 31. Specifically, for example, the control device 52 and the neutralizer supply device 31A function as the coping section 31 and a neutralizer supply section, and may operate such that, when the concentration (detected value) of the residual chlorine detected by the second residual chlorine sensor 27 has exceeded a predetermined value, the control device 52 sends a neutralizer supplying instruction to the neutralizer supply device 31A, and the neutralizer supply device supplies a "neutralizer for causing a neutralization reaction with the residual chlorine" into the standby tank 25 in accordance with the neutralizer supplying instruction.

The coping section 31 may operate such that, when the detected value of the concentration of the residual chlorine detected by the second residual chlorine sensor 27 has exceeded a predetermined value, the channel is switched so as to cause rearing water to flow from the standby tank 25 to another region without returning the rearing water from the standby tank 25 to the rearing tank 3. For example, a three-way valve (not shown) may be provided at a certain position along the channel 47 so that the supply destination of rearing water flowing through the channel 47 can be switched between the rearing tank 3 and another region by the three-way valve. In this example, the control device 52 and the three-way valve can function as the coping section 31. Specifically, the control device 52 may perform control such that, when the detected value of the concentration of the residual chlorine detected by the second residual chlorine sensor 27 is equal to or smaller than a predetermined value, the supply destination from the three-way valve is set to be the rearing tank 3, and when the detected value of the concentration of residual chlorine detected by the second residual chlorine sensor 27 has exceeded the predetermined value, the supply destination from the three-way valve is set to be another region.

Alternatively, when the detected value of the concentration of residual chlorine detected by the second residual chlorine sensor 27 has exceeded the predetermined value, the coping section 31 may shut the channel through which rearing water flows from the standby tank 25 to the rearing tank 3, to stop returning rearing water to the rearing tank 3, or may stop circulation of rearing water in the system 1, to stop returning rearing water to the rearing tank 3. For example, an open/close valve (not shown) may be provided at a certain position along the channel 47. Then, when the open/close valve is opened, flow in the channel 47 may be allowed, and when the open/close valve is closed, flow in the channel 47 may be interrupted. In this example, the control device 52 and the open/close valve can function as the coping section 31. Specifically, the control device 52 may perform control such that, when the detected value of the concentration of the residual chlorine detected by the second residual chlorine sensor 27 is equal to or smaller than a predetermined value, the open/close valve is opened, and when the detected value of the concentration of residual chlorine detected by the second residual chlorine sensor 27 has exceeded the predetermined value, the open/close valve is closed. In this example, when the open/close valve is closed, driving of the pumps for circulating rearing water in the system may be stopped so that rearing water does not overflow from the standby tank 25, and a channel may be provided such that rearing water is discharged from the standby tank 25 to another region when the water surface of the standby tank 25 has exceeded a certain level.

### (Control Based on Monitoring of pH)

In the present embodiment, an adjuster supply device 32 is provided so as to supply a pH adjuster to rearing water in the fourth region. In the example shown in FIG. 7, the adjuster supply device 32 is configured to supply a pH adjuster to rearing water in the standby tank 25. The control device 52 sends an instruction for a supply time and a supply rate to the adjuster supply device 32, and the adjuster supply device 32 supplies the pH adjuster at the supply rate indicated by the control device 52, at the supply time indicated by the control device 52.

As the pH adjuster to be supplied from the adjuster supply device 32, one of sodium hydroxide, potassium hydroxide, calcium hydroxide, sodium carbonate, and sodium bicarbonate can be preferably used, it is more preferable to use sodium carbonate or sodium bicarbonate, and it is even more preferable to use sodium carbonate. In a case of using sodium carbonate, sodium bicarbonate, calcium carbonate, or the like as the pH adjuster, a water solution containing one of them may be used. When sodium carbonate which exhibits a great pH is used, since sodium carbonate is a strong alkali, there is an advantage that the pH of rearing water is readily increased and the ion balance is less likely to be lost. Sodium bicarbonate has an advantage that the ion balance is less likely to be lost and a pH buffer function can be exerted. In order to prevent the pH adjustment effect from being hindered by precipitation of magnesium contained in seawater, the pH of the pH adjuster is preferably equal to or smaller than 11.5.

The control by the control device 52 may be performed by various methods. For example, the control device 52 may perform ON/OFF control such that, when the pH of rearing water detected by the pH sensor 28 has become equal to or smaller than a first reference value, the adjuster supply device 32 is operated so as to supply the pH adjuster having a greater pH than the first reference value at a predetermined supply rate, and when the pH of rearing water detected by the pH sensor 28 has exceeded a second reference value in a state in which the adjuster supply device 32 is supplying the pH adjuster, supply of the pH adjuster by the adjuster supply device 32 is stopped. In the above example, the first reference value and the second reference value may be the same or different from each other.

In order to reduce the consumption amount of the pH adjuster, a solid (e.g., pellet) of calcium carbonate may be provided in the fourth region (e.g., the channel 46 or 47 or the internal region of the standby tank 25).

In the above example, the supply timing for the pH adjuster is controlled. However, instead of such a method, the pH adjuster may be continuously supplied at a constant supply rate.

### 4. Cleaning of Electrodes

As shown in FIG. 5, in the present embodiment, the control device 52 and the drive circuit 53 function as the voltage application section 51. The voltage application section 51 operates so as to switch between a first state of performing electrolysis in the above "region" (specifically, in the electrolysis tank 11) by applying voltage with the first electrode 55A as an anode and the second electrode 55B as a cathode, and a second state of applying voltage with the second electrode 55B as an anode and the first electrode 55A as a cathode. For example, the voltage application section 51 regularly switches between an operation of performing electrolysis of rearing water while continuing the first state and an operation of performing electrolysis of rearing water while continuing the second state. A switching cycle for regularly switching may be an interval of several tens of minutes, an interval of several hours, an interval of one day, or another interval.

The timings at which the voltage application section 51 switches between the first state and the second state are not limited to regular timings, and may be timings when a predetermined condition is satisfied. For example, switching may be performed at a timing when the operation period of the circulation-type water treatment system 1 from the last switching time has reached a certain period, may be performed at a timing when one of the detected value from the sensors has become a predetermined value, may be performed at a randomly determined timing, or may be performed at another timing.

In the present embodiment, an operation in the first state is continuously performed in which voltage is continuously applied with the first electrode 55A as an anode and the second electrode 55B as a cathode by the voltage application section 51 while "replacement of rearing water" is performed so as to successively continue introduction of rearing water from the channel 42 into the electrolysis tank 11 and discharge of rearing water from the electrolysis tank 11 into the first guide path 56. When a switching condition is satisfied during the operation in the first state, switching from the first state to the second state is performed while the above "replacement of rearing water" is performed, and after the switching, an operation in the second state is continuously performed in which voltage is applied with the second electrode 55B as an anode and the first electrode 55A as a cathode while the above "replacement of rearing water" is performed. When a switching condition is satisfied during the operation in the second state, switching from the second state to the first state is performed while the above "replacement of rearing water" is performed. Through such a procedure, the operation in the first state and the operation in the second state are alternately performed. During a period in which the operation in the first state is being performed or a period in which the operation in the second state is being performed, the operation may be continued without interruption, or may be temporarily interrupted for some reason.

### 5. Examples of Effects

In the above example, the circulation-type water treatment system 1 may correspond to an example of the electrolysis apparatus, and the electrolysis section 13 may correspond to an example of the electrolysis apparatus. In the electrolysis apparatus or the electrolysis method using the electrolysis apparatus, by performing electrolysis of rearing water containing salt, a chloric acid compound (e.g., sodium hypochlorite) is generated, so that the chloric acid compound reacts with ammonia or ammonium ions present in the rearing water, whereby ammonia or ammonium ions can be directly decomposed to nitrogen, and in the decomposition process, generation of nitrous acid, nitric acid, and the like can be assuredly prevented. However, in a case of adopting the above method, without taking any measure, there is a concern that deposits are deposited on the surfaces of the electrodes and thus hampers electrolysis. In the above electrolysis apparatus, it is possible to switch between a first state of performing electrolysis by applying voltage with the first electrode 55A as an anode and the second electrode 55B as a cathode, and a second state of applying voltage with the second electrode 55B as an anode and the first electrode 55A as a cathode. Therefore, the deposits deposited on the surfaces of the electrodes through continuous electrolysis can be easily separated from the electrodes by switching. Thus, the electrolysis apparatus can easily remove deposits deposited on the surfaces of the electrodes.

When electrolysis is continuously performed for rearing water containing salt, there is a problem that, for example, a deposit containing magnesium as a main component is produced on the cathode side and covers the electrode. When deposits cover the electrodes as described above, the generation amount of sodium hypochlorite is gradually reduced or is likely to become unstable. In order to avoid such a situation, it is conceivable that cleaning is regularly performed by applying a physical force to the deposits on the electrodes. However, if mechanical cleaning or the like is frequently performed, the electrodes are likely to be damaged, thus causing a problem that the life or performance is impaired. In addition, cleaning by scrubbing from the electrode surface or cleaning by the water pressure requires human labor, and therefore it is difficult to achieve automation, labor reduction, and stable operation. However, the above electrolysis apparatus can effectively prevent or solve such problems.

In the above electrolysis apparatus, the electrode section 55 in which the first electrode 55A, the second electrode 55B, and the electrode holding portion 55C are integrally formed is configured to be attachable and detachable to and from the electrolysis tank 11. Therefore, work for detaching the electrode section 55 in order to perform cleaning can be easily performed. In particular, promotion of separation of deposits by switching and ease of work for attaching/detaching the electrode section 55 exhibit a synergistic effect, thus further facilitating cleaning.

In the above electrolysis apparatus, deposits falling from the electrode section 55 can be automatically collected toward a predetermined position by the guide section 58. Thus, it is possible to easily perform not only separation of deposits from the electrode section 55 but also collection of the separated deposits.

In the above electrolysis apparatus, deposits having fallen from the electrode section 55 can be taken into the pipe 59A of the discharge section 59 at a lower position than the electrode section 55 and can be discharged therethrough. Therefore, it is possible to prevent such a phenomenon that "in a deposit discharge process, deposits are dispersed and thus readily flow to the subsequent process".

In the above electrolysis apparatus, supernatant water present at a higher position than a predetermined height in the electrolysis tank 11 can be led to outside, and deposits falling to a lower position than the predetermined height can be less likely to be led to outside of the electrolysis tank 11. Specifically, since the predetermined height is a higher position than the lower end of the electrode section 55, deposits separated from the electrode section 55 and falling downward from the lower end are less likely to be led to outside of the electrolysis tank 11.

In the above electrolysis apparatus, water flow can be generated so as to rise from the lower side to the upper side of the electrode section 55 in the electrolysis tank 11 by the water flow generation section 57. Thus, fresh rearing water is readily led to the electrode section 55, so that efficiency of electrolysis can be further enhanced.

In the above electrolysis apparatus, an operation of performing electrolysis of rearing water while continuing the first state and an operation of performing electrolysis of rearing water while continuing the second state are regularly switched therebetween, whereby deposits can be regularly separated and thus the electrodes can be regularly cleaned.

In the circulation-type water treatment system 1, solids contained in rearing water in the first region can be removed by the removal section 5. Further, in the circulation-type water treatment system 1, ammonia or ammonium ions can be decomposed by the electrolysis section 13 in the second region after passage through the first region, and electrolysis of rearing water is performed after solids are removed by the removal section 5, whereby solids can be assuredly prevented from hampering electrolysis and thus electrolysis can be favorably performed. Further, the circulation-type water treatment system 1 can remove residual chlorine by the activated carbon section 23 in the third region in which rearing water having passed through the second region is stored or flows. Therefore, even if a chloric acid compound that has not been used for decomposition of ammonia or ammonium ions is contained in the rearing water in the third region, the chloric acid compound can be effectively removed by the activated carbon section. As described above, in the circulation-type water treatment system 1, solids such as excrement and residual feed have been assuredly reduced in rearing water after passage through the third region, and nitrogen compound components such as ammonia, nitrous acid, and nitric acid are also assuredly reduced, thus providing a significant advantage in terms of purifying rearing water and making rearing water harmless.

In the circulation-type water treatment system 1, supernatant water present at a higher position than the first height in the electrolysis tank 11 can be led to outside of the electrolysis tank 11. Therefore, when deposits are separated from the electrode and falls, the deposits are less likely to be led to outside of the electrolysis tank 11. Even if some of the deposits are discharged from the electrolysis tank 11 and move into the reaction tank 15, supernatant water present at a higher position than the second height in the reaction tank 15 can be led to outside of the reaction tank 15, and therefore the deposits having moved into the reaction tank 15 are likely to settle in the reaction tank 15 and less likely to be led to outside of the reaction tank 15.

In the circulation-type water treatment system 1 or the electrolysis method using the above electrolysis apparatus, it is possible to perform an operation in the first state, an operation in the second state, and switching between the first state and the second state, while performing replacement of rearing water by continuing introduction of rearing water into the electrolysis tank 11 and discharge of rearing water from the electrolysis tank 11. Thus, it is possible to clean the electrodes while more efficiently circulating rearing water.

### <Second Embodiment>

The following description relates to a second embodiment.

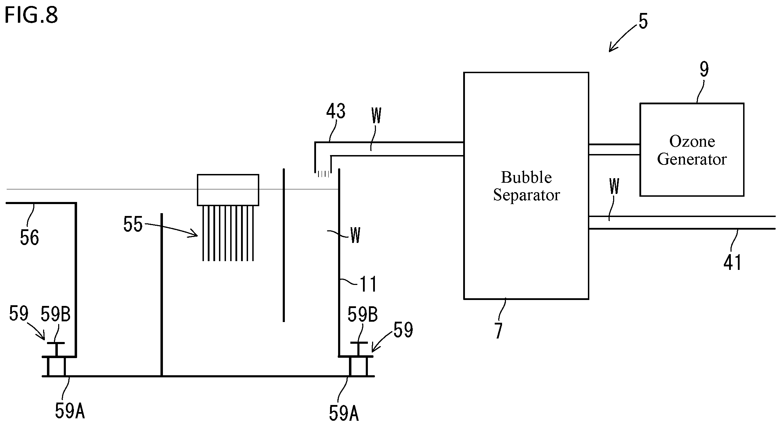

A circulation-type water treatment system 1 and an aquaculture method using the system 1, according to the second embodiment, are different from the first embodiment in that, as the removal section 5 shown in FIG. 1, a configuration shown in FIG. 8 is used instead of the configuration shown in FIG. 3 and FIG. 4. The configurations other than the configuration of the removal section 5 are the same as those in the first embodiment. Therefore, in the following description, except for the configuration shown in FIG. 3, the configurations and the like shown in FIG. 1, FIG. 2, FIG. 5, FIG. 6, and FIG. 7 are used, and reference characters, names, and the like shown in these drawings are used as appropriate.

In the example shown in FIG. 8, the removal section 5 is configured such that rearing water introduced from a region of a process preceding to the removal section 5 is introduced into the bubble separator 7 and then is led out through the bubble separator 7 to a region of a subsequent process different from the region of the preceding process. The region of the preceding process is the region in the rearing tank 3. The region in the subsequent process is the region in the electrolysis tank 11. In the removal section 5, rearing water supplied from the region of the process preceding the removal section 5 is introduced into the bubble separator 7 through the channel 41 (the channel 41 corresponds to an example of an introduction path), and then is led out through the bubble separator 7 to the "region of the process subsequent to the removal section 5" (e.g., the region in the electrolysis tank 11) which is different from a region of an introduction source (e.g., the region in the rearing tank 3) where an inlet of the channel 41 (introduction path) is located. The removal section 5 has a configuration in which the total amount of rearing water flowing from the rearing tank 3 through the channel 41 is sent into the bubble separator 7 and there is no channel through which rearing water flows from the rearing tank 3 into the electrolysis tank 11 without passing through the bubble separator 7, so that the rearing water sent into the bubble separator 7, other than materials removed with bubbles in the bubble separator 7, is sent from the bubble separator 7 into the electrolysis tank 11 through the channel 43. The operation of the bubble separator 7 is the same as that in the first embodiment, and also in this example, bubbles containing ozone are generated in the bubble separator 7.

As described above, in the circulation-type water treatment system 1 according to the second embodiment, in removing solids by the removal section 5, rearing water introduced from the region of the preceding process is introduced into the bubble separator 7, and then is led out through the bubble separator 7 into the region of the subsequent process different from the region of the preceding process. Thus, the circulating rearing water can be more assuredly passed through the bubble separator 7, whereby the effect of removing solids and the effect of sterilization and disinfection by ozone can be further enhanced.

### <Third Embodiment>

The following description relates to a third embodiment.

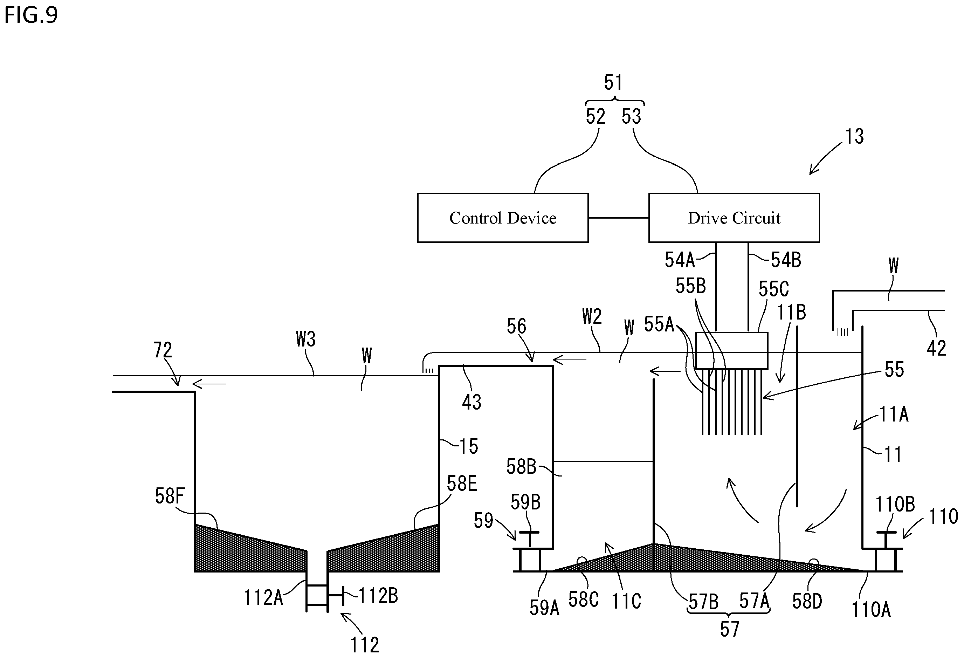

The circulation-type water treatment system 1 and an aquaculture method using the system 1, according to the third embodiment, are different from the first embodiment in that a configuration shown in FIG. 9 is used instead of the configuration shown in FIG. 5. Specifically, the third embodiment is the same as the first embodiment except that slope portions 58C, 58D, 58E, and 58F and discharge sections 110 and 112 are provided in addition to the configuration shown in FIG. 5. Therefore, in the following description, except for the configuration shown in FIG. 5, the configurations and the like shown in FIG. 1 to FIG. 4, FIG. 6, and FIG. 7 are used, and reference characters, names, and the like shown in these drawings are used as appropriate.

As shown in FIG. 9, in the electrolysis tank 11, a discharge section 110 is provided in addition to the discharge section 59. The discharge section 110 includes a pipe 110A through which deposits having fallen from the electrode section 55 in the electrolysis tank 11 are discharged, and an open/close portion 110B that opens/closes the pipe 110A. The discharge section 110 functions to take deposits into the pipe 110A at a lower position than the electrode section 55 and discharge the deposits through the pipe 110A from the electrolysis tank 11. The open/close portion 110B is an open/close plug for switching between a state of shutting the pipe 110A and opening the pipe 110A by a manual operation, for example. The open/close portion 110B may be a solenoid valve which is switched to be opened/closed through control, or the like. In any case, when the open/close portion 110B is opened, rearing water is discharged through the pipe 110A from the vicinity of a predetermined position in the electrolysis tank 11. When deposits are settled in the vicinity of the predetermined position, the deposits are discharged through the pipe 110A together with the rearing water.

In the example shown in FIG. 9, the slope portion 58C is provided in addition to the slope portions 58A and 58B. The slope surface of the slope portion 58C is sloped with respect to the up-down direction, and the slope portion 58C guides an object sinking along the slope surface of the slope portion 58C so that the object moves in a second direction perpendicular to the up-down direction and the first direction (specifically, so that the object moves toward the discharge section 59 side in the second direction). Further, in the example shown in FIG. 9, the slope portion 58D is provided. The slope surface of the slope portion 58D is sloped with respect to the up-down direction, and the slope portion 58D guides an object sinking along the slope portion 58D so that the object moves in the second direction (specifically, so that the object moves toward the discharge section 110 side in the second direction).

In the example shown in FIG. 9, also in the reaction tank 15, the discharge section 112 is provided. The discharge section 112 includes a pipe 112A through which deposits having fallen in the reaction tank 15 are discharged, and an open/close portion 112B that opens/closes the pipe 112A. The discharge section 112 functions to take a sinking object into the pipe 112A and discharge the object through the pipe 112A. The open/close portion 112B is an open/close plug for switching between a state of shutting the pipe 112A and a state of opening the pipe 112A by a manual operation, for example. The open/close portion 112B may be a solenoid valve which is switched to be opened/closed through control, or the like. In any case, when the open/close portion 112B is opened, rearing water is discharged through the pipe 112A from the vicinity of a predetermined position in the reaction tank 15. When an object is settled in the vicinity of the predetermined position, the object is discharged through the pipe 112A together with the rearing water. Also in the reaction tank 15, the slope portions 58E and 58F are provided. The slope surfaces of the slope portions 58E and 58F are sloped with respect to the up-down direction, and each of the slope portions 58E and 58F guides an object sinking along the slope surface of the slope portion so that the object moves in the second direction (specifically, so that the object moves toward the discharge section 112 side in the second direction).

In the example shown in FIG. 9, the pipes 59A, 110A, and 112A are fixed pipes permanently installed, but may be pipes that are attachable and detachable. In any of the pipes, discharging may be performed using the water pressure in the tank, or may be performed through suction or flow caused by a pump or the like.

### <Fourth Embodiment>

The following description relates to a fourth embodiment.

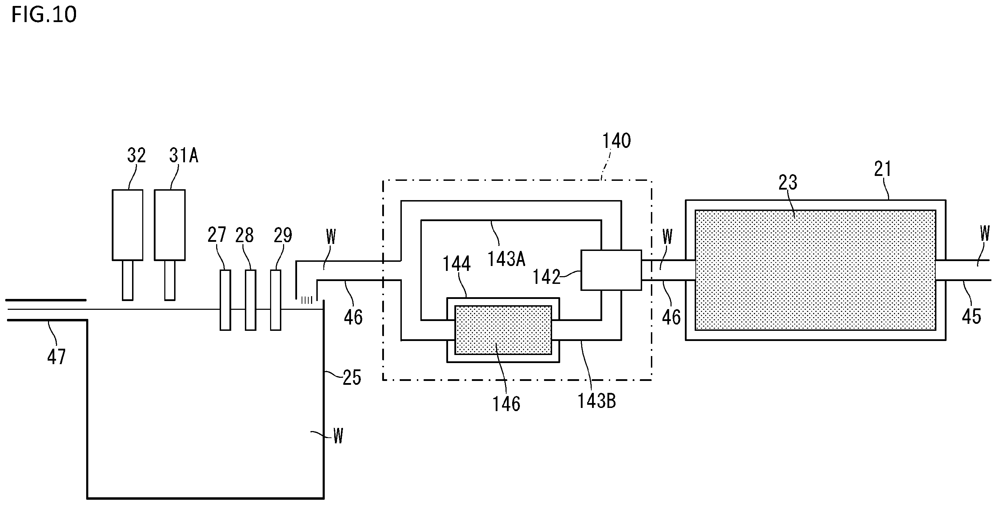

A circulation-type water treatment system 1 and an aquaculture method using the system 1, according to the fourth embodiment, are different from the first embodiment in that a configuration shown in FIG. 10 is used instead of the configuration shown in FIG. 7, and are also different from the first embodiment in that a switching section 140 is provided at a certain position along the channel 46, in addition to the configuration shown in FIG. 7. The other configurations are the same as those in the first embodiment. Therefore, in the following description, except for the configuration of the switching section 140, the configurations and the like shown in FIG. 1 to FIG. 7 are used, and reference characters, names, and the like shown in these drawings are used as appropriate.

In the circulation-type water treatment system 1 according to the fourth embodiment, a switch valve 142 is provided in the switching section 140, and the switch valve 142 can switch a path through which rearing water discharged from the residual chlorine removal tank (e.g., activated carbon tank 21) to the channel 46 flows, to one of a channel 143A which does not pass through the second removal section 146 and a channel 143B which passes through the second removal section 146.

The second removal tank 144 is formed as a channel through which rearing water passes, and the internal space of the channel is loaded with a component (e.g., particles of calcium sulfite) for removing residual chlorine, thus forming the second removal section 146. The second removal tank 144 is formed as a channel having an inlet and an outlet, and as a representative example, particles of calcium sulfite are loaded in the internal space thereof. In a case where the switch valve 142 is set so that the outflow destination from the switch valve 142 becomes the channel 143B, rearing water having passed through the switch valve 142 and flowing from the inlet of the second removal tank 144 passes through gaps in the internal space of the second removal tank 144 (gaps between multiple particles of calcium sulfite), and through this process, residual chlorine and residual ozone contained in the rearing water are removed by calcium sulfite, so that the rearing water discharged from the outlet of the second removal tank 144 to the channel 46 on the downstream side becomes rearing water from which a part or the entirety of chlorine and ozone has been removed.

In this configuration, when the concentration of residual chlorine detected by the second residual chlorine sensor 27 is equal to or smaller than a reference value, the control device 52 switches the switch valve 142 so that rearing water flows from the residual chlorine removal tank (e.g., activated carbon tank 21) to the channel 143A without flowing to the channel 143B. On the other hand, when the concentration of residual chlorine detected by the second residual chlorine sensor 27 has exceeded the reference value, the control device 52 switches the switch valve 142 so that rearing water flows from the residual chlorine removal tank (e.g., activated carbon tank 21) to the channel 143B without flowing to the channel 143A. In this way, when the concentration of residual chlorine detected by the second residual chlorine sensor 27 has become relatively high, the channel can be switched so that rearing water from the residual chlorine removal tank (e.g., activated carbon tank 21) flows through the second removal section 146, whereby residual chlorine can be removed also by the second removal section 146. The control method described here is merely an example, and the timing and the period for causing rearing water to flow through the second removal tank 144 are not limited to the above example.

### <Other Embodiments>

This invention is not limited to the embodiments described by the above description and the drawings. For example, the features of embodiments described above or below can be arbitrarily combined without contradicting each other. Any of the features of embodiments described above or below can be omitted unless specified as essential. Further, the above embodiments may be changed as follows.

In the above embodiments, ozone is supplied as gas to the bubble separator 7 and bubbles containing ozone are generated. However, instead of ozone, another gas (e.g., air) may be supplied and bubbles containing the other gas may be generated.

In the above embodiments, the internal region of the electrolysis tank 11 formed as a tank having a part for storing rearing water is the second region. However, the electrolysis tank 11 may be formed as a channel not having such a storage part, and the internal region of the electrolysis tank 11 may be the second region.

In the above embodiments, the reaction tank 15 is formed as a tank having a part for storing rearing water. However, the reaction tank 15 may be formed as a channel not having such a storage part.

In the above embodiments, the first residual chlorine sensor 19 is provided so as to detect the concentration of residual chlorine of rearing water in the filtration tank 17. However, the first residual chlorine sensor 19 may be configured to detect the concentration of residual chlorine in the channel from the reaction tank 15 to the activated carbon tank 21.

In the above embodiments, the internal region of the activated carbon tank 21 formed as a tank having a part for storing rearing water is the third region. However, the activated carbon tank 21 may be formed as a channel not having such a storage part, and the internal region of the activated carbon tank 21 may be the third region.

In the above embodiments, the internal region of the standby tank 25 formed as a tank having a part for storing rearing water is the fourth region. However, the standby tank 25 may be formed as a channel not having such a storage part, and the internal region of the standby tank 25 may be the fourth region.

In the above embodiments, as shown in FIG. 1 and FIG. 7, the activated carbon tank 21 including the activated carbon section 23 formed by loading particles of activated carbon is provided as the residual chlorine removal tank. However, instead of particles of activated carbon of the activated carbon section 23, particles of calcium sulfite may be used and the residual chlorine removal tank may be loaded with particles of calcium sulfite. Also in this example, the residual chlorine removal tank can be formed as a channel having an inlet and an outlet, and the internal space of the channel may be loaded with particles of calcium sulfite. Also in this example, through a process in which rearing water flowing from the inlet of the residual chlorine removal tank passes through gaps in the internal space (gaps between multiple particles of calcium sulfite), residual chlorine and residual ozone contained in rearing water are removed by calcium sulfite, so that the rearing water discharged from the outlet becomes rearing water from which a part or the entirety of chlorine and ozone has been removed.

In the configuration shown in FIG. 10 in the fourth embodiment, the switching section 140 is provided at a certain position along the channel 46. However, in any of the configurations of the first to third embodiments, the switching section 140 may be provided at a certain position along the channel 47 (e.g., a position enclosed by a two-dot dashed line X in FIG. 1) in the configuration shown in FIG. 1. In this case, by performing the same control as in the above fourth embodiment, a path through which rearing water discharged from the standby tank 25 to the channel 47 flows may be switched to one of the channel 143A which does not pass through the second removal section 146 and the channel 143B which passes through the second removal section 146, so that rearing water having passed through one of the channel 143A or the second removal section 146 is supplied to the rearing tank 3.

In any of the above embodiments, a biological tank may be provided for reducing ammonia or ammonium ions in rearing water by organisms in a region until rearing water flows into the second region after being sent from the rearing tank. In this case, for example, in the circulation-type water treatment system 1 (FIG. 3) according to the first embodiment, the biological tank may be provided between the reservoir tank 60 and the electrolysis tank 11 so that rearing water flowing out from the reservoir tank 60 flows into the biological tank and rearing water flowing out from the biological tank flows into the electrolysis tank 11. Alternatively, in the circulation-type water treatment system 1 (FIG.8) of the second embodiment, rearing water flowing out from the bubble separator 7 may flow into the biological tank and rearing water flowing out from the biological tank may flow into the electrolysis tank 11.

In this example, it is desirable that the biological tank is configured such that rearing water flowing out from the rearing tank 3 flows into the biological tank via a channel or the like and the inflow rearing water can be stored in the biological tank. Meanwhile, it is desirable that, as an example of organisms, nitrifying bacteria (microorganisms) for oxidizing ammonia so as to be changed to nitrous acid and further nitric acid are stored in the biological tank. In this configuration, ammonia or ammonium ions contained in rearing water flowing into the biological tank are reduced by microorganisms, and the rearing water treated so that ammonia or ammonium ions have been reduced as described above flows into the electrolysis tank 11 directly or via another region from the biological tank.

The order of the removal section and the biological tank may be configured such that rearing water having passed through the removal section flows into the biological tank, or may be configured such that rearing water having passed through the biological tank flows into the removal section. Alternatively, a part or the entirety of the biological tank may be used also as the removal section. In any case, it suffices that a part or the entirety of rearing water flowing out from the rearing tank 3 and then flowing into the electrolysis tank 11 flows into the electrolysis tank 11 via the biological tank.

In the above example, the biological tank is configured to store rearing water and microorganisms therein. However, instead of or in addition to this configuration, the biological tank may be configured to allow ammonia or ammonium ions contained in rearing water to be reduced by an action of other organisms. The number of biological tanks is not limited to one and may be plural.

For example, the biological tank may be configured to rear vegetables or other plants as "organisms", instead of the above "biological tank storing microorganisms". In this case, rearing water flowing directly or via another region from the rearing tank 3 may be stored or flow temporarily in the biological tank, and the rearing water in the biological tank may be continuously or intermittently supplied to plants to raise the plants, while the plants absorb ammonia or ammonium ions in the rearing water, thus purifying the rearing water.

In the "circulation-type water treatment system using the biological tank and the electrolysis tank in combination", ammonia or ammonium ions can be reduced by the biological tank at a stage preceding decomposition of ammonia or ammonium ions by the electrolysis section 11. Thus, as compared to a configuration in which reduction of ammonia or ammonium ions contained in rearing water is performed by only the electrolysis section 11, the load on the electrolysis section 11 can be reduced and also power consumption needed for electrolysis can be readily reduced. Meanwhile, since this is not a configuration in which reduction of ammonia or ammonium ions contained in rearing water is performed by only the biological tank, it is possible to more effectively decompose ammonia or ammonium ions in water by a method less dependent on organisms. Further, in the above circulation-type water treatment system, a chloric acid compound (e.g., sodium hypochlorite) is generated in the second region (the region in the electrolysis tank 11) into which rearing water having passed through the biological tank flows. Therefore, not only ammonia or ammonium ions can be removed, but also, in a case where bacteria or viruses are contained in the rearing water having passed through the biological tank, sterilization or deactivation of viruses can be performed.

The embodiments disclosed herein should be considered illustrative and not restrictive, in all aspects. The scope of this invention is not limited to the embodiments disclosed herein and is intended to include all modifications in the scope defined by the claims or in a scope equivalent to the scope of the claims.

**DESCRIPTION OF THE REFERENCE CHARACTERS**

| | | | |
|---|---|---|---|
| 1 | circulation-type water treatment system | 52 | control device |
| | | 53 | drive circuit |
| 3 | rearing tank | 54A | electric path |
| 5 | removal section | 54B | electric path |
| 7 | bubble separator | 55 | electrode section |
| 9 | ozone generator | 55A | first electrode |
| 11 | electrolysis tank | 55B | second electrode |
| 11A | first rearing water flowing chamber | 55C | electrode holding portion |
| 11B | second rearing water flowing chamber | 56 | first guide path |
| 11C | third rearing water flowing chamber | 57 | water flow generation section |
| 11Z | bottom wall | 57A | first partition wall |
| 13 | electrolysis section | 57B | second partition wall |
| 15 | reaction tank | 58 | guide section |
| 17 | filtration tank | 58A, 58B | slope portion |
| 19 | first residual chlorine sensor | 59 | discharge section |
| 21 | activated carbon tank (residual chlorine removal tank) | 59A | pipe |
| | | 59B | open/close portion |
| 23 | activated carbon section (residual chlorine removing section) | 60 | reservoir tank |
| | | 60A | bottom |
| 25 | standby tank | 62 | introduction section |
| 27 | second residual chlorine sensor | 64 | lead-out section |
| 29 | ammonium ion sensor | 66 | discharge section |
| 31 | coping section | 72 | second guide path |
| 35 | temperature controller | W1 | water surface |
| 37 | filter | W2 | water surface |
| 41, 42, 43, 44, 45, 46, 47 | channel | W3 | water surface |
| 51 | voltage application section | | |

## Claims

1. An electrolysis apparatus for aquatic organism aquaculture, used in a circulation-type water treatment system including a rearing tank which is a tank for performing aquaculture of aquatic organisms and in which rearing water containing salt is stored, the circulation-type water treatment system being configured to treat the rearing water while circulating the rearing water from the rearing tank, and return the treated rearing water to the rearing tank,
the electrolysis apparatus comprising an electrolysis section configured to perform electrolysis of the rearing water in a region in which the rearing water is stored or flows, thereby generating a chloric acid compound, so that the generated chloric acid compound reacts with ammonia or ammonium ions in the rearing water, thereby decomposing ammonia or ammonium ions in the rearing water, wherein
the electrolysis section includes
an electrode section including a first electrode and a second electrode located in the region, and
a voltage application section configured to apply voltage between the first electrode and the second electrode, and
the voltage application section switches between a first state of performing the electrolysis in the region while applying voltage with the first electrode as an anode and the second electrode as a cathode, and a second state of applying voltage with the second electrode as an anode and the first electrode as a cathode.

2. The electrolysis apparatus for aquatic organism aquaculture according to claim 1, wherein
the electrode section includes an electrode holding portion holding the first electrode and the second electrode, and the first electrode, the second electrode, and the electrode holding portion are integrally formed,
the circulation-type water treatment system is provided with an electrolysis tank configured such that the rearing water is stored or flows therein, and inside of the electrolysis tank is the region, and
the integrally formed electrode section is attachable and detachable to and from the electrolysis tank.

3. The electrolysis apparatus for aquatic organism aquaculture according to claim 1 or 2, further comprising an electrolysis tank configured such that the rearing water is stored or flows therein, wherein
inside of the electrolysis tank is the region, and
the electrolysis apparatus further comprises a guide section configured to guide and collect deposits falling from the electrode section in the electrolysis tank, toward a predetermined position in the electrolysis tank.

4. The electrolysis apparatus for aquatic organism aquaculture according to claim 1 or 2, further comprising an electrolysis tank configured such that the rearing water is stored or flows therein, wherein
inside of the electrolysis tank is the region,
the electrolysis apparatus further comprises a discharge section including a pipe through which deposits having fallen from the electrode section in the electrolysis tank are discharged, and
the discharge section is configured to take the deposits into the pipe at a lower position than the electrode section and discharge the deposits from the electrolysis tank through the pipe.

5. The electrolysis apparatus for aquatic organism aquaculture according to claim 1 or 2, further comprising an electrolysis tank configured such that the rearing water is stored or flows therein, wherein
inside of the electrolysis tank is the region, and
the electrolysis tank includes a guide path configured to guide water present at a higher position than a predetermined height in the electrolysis tank to outside of the electrolysis tank without guiding water present at a lower position than the predetermined height to outside of the electrolysis tank.

6. The electrolysis apparatus for aquatic organism aquaculture according to claim 5, wherein
the predetermined height is a higher position than a lower end of the electrode section.

7. The electrolysis apparatus for aquatic organism aquaculture according to claim 1 or 2, further comprising an electrolysis tank configured such that the rearing water is stored or flows therein, wherein
inside of the electrolysis tank is the region,
the electrode section is located on a water surface side of the rearing water in the electrolysis tank, and
the electrolysis apparatus further comprises a water flow generation section configured to cause the rearing water introduced into the electrolysis tank from outside of the electrolysis tank to flow so as to rise from a lower side to an upper side of the electrode section in the electrolysis tank.

8. The electrolysis apparatus for aquatic organism aquaculture according to claim 1 or 2, wherein
the voltage application section regularly switches between an operation of performing electrolysis of the rearing water while continuing the first state and an operation of performing electrolysis of the rearing water while continuing the second state.

9. A circulation-type water treatment system for aquatic organism aquaculture, comprising:
the electrolysis apparatus for aquatic organism aquaculture according to claim 1 or 2;
a removal section configured to remove at least solids in a first region in which the rearing water sent from the rearing tank is stored or flows;
the electrolysis section configured to perform the electrolysis of the rearing water in a second region which is the region in which the rearing water having passed through the first region is stored or flows; and
an activated carbon section configured to remove at least residual chlorine by activated carbon in a third region in which the rearing water having passed through the second region is stored or flows.

10. A circulation-type water treatment system for aquatic organism aquaculture, comprising:
the electrolysis apparatus for aquatic organism aquaculture according to claim 1 or 2;
an electrolysis tank configured such that the rearing water is stored or flows therein; and
a reaction tank configured such that the rearing water discharged from the electrolysis tank is stored or flows in the reaction tank, wherein
inside of the electrolysis tank is the region,
the electrolysis tank includes a first guide path configured to guide water present at a higher position than a first height in the electrolysis tank to outside of the electrolysis tank without guiding water present at a lower position than the first height to outside of the electrolysis tank, and
the reaction tank includes a second guide path configured to guide water present at a higher position than a second height in the reaction tank to outside of the reaction tank without guiding water present at a lower position than the second height to outside of the reaction tank.

11. An electrolysis method for aquatic organism aquaculture, used in a circulation-type water treatment system including a rearing tank which is a tank for performing aquaculture of aquatic organisms and in which rearing water containing salt is stored, the circulation-type water treatment system being configured to treat the rearing water while circulating the rearing water from the rearing tank, and return the treated rearing water to the rearing tank, the electrolysis method being performed using an electrolysis section including
an electrode section including a first electrode and a second electrode, and
a voltage application section configured to apply voltage between the first electrode and the second electrode,
the electrolysis method comprising:
applying voltage between the electrodes by the voltage application section in a state in which the first electrode and the second electrode are located in a region in which the rearing water is stored or flows, thereby performing electrolysis of the rearing water and generating a chloric acid compound, so that the generated chloric acid compound reacts with ammonia or ammonium ions in the rearing water, thereby decomposing ammonia or ammonium ions in the rearing water; and
by the voltage application section, switching between a first state of performing the electrolysis in the region by applying voltage with the first electrode as an anode and the second electrode as a cathode, and a second state of applying voltage with the second electrode as an anode and the first electrode as a cathode.

12. The electrolysis method for aquatic organism aquaculture according to claim 11, wherein
an electrolysis tank configured such that the rearing water is stored or flows therein is used,
the electrode section is provided such that inside of the electrolysis tank is the region, and
the electrolysis method further comprises performing an operation in the first state, an operation in the second state, and switching between the first state and the second state by the voltage application section, while performing replacement of the rearing water by continuing introduction of the rearing water into the electrolysis tank and discharge of the rearing water from the electrolysis tank.

13. The electrolysis method for aquatic organism aquaculture according to claim 11 or 12, further comprising, by the voltage application section, regularly switching between an operation of performing electrolysis of the rearing water while continuing the first state and an operation of performing electrolysis of the rearing water while continuing the second state.
